# EUROPEAN PATENT APPLICATION

(11) **EP 4 801 082 A1**
(43) Date of publication of application: **02.09.2026**
(21) Application number: 25810772.1
(22) Date of filing: 10.11.2025
(51) Int. Cl.: H04W 4/80, H04W 76/14, H04W 12/47, H04W 12/77, H04W 12/06

(54) **ELECTRONIC DEVICE AND OPERATING METHOD OF ELECTRONIC DEVICE**

(30) Priority: 07.01.2025 KR 20250002386
(71) Applicant: Samsung Electronics Co., Ltd., Suwon-si, Gyeonggi-do 16677 (KR)
(72) Inventor: JEE, Hojeen, Suwon-si, Gyeonggi-do 16677 (KR)
(74) Representative: Appleyard Lees IP LLP
(86) International application number: PCT/KR2025/018359
(87) International publication number: WO 2026/151041

(57) **Abstract**

A device includes a communication interface, memory storing at least one instruction, and at least one processor including processing circuitry, wherein the at least one instruction, when executed by the at least one processor individually or collectively, causes the device to, when a first approach or contact with a short-range communication tag is identified, obtain identification information corresponding to an application from the short-range communication tag, perform a communication connection to a second device according to the application executed based on the identification information corresponding to the application, obtain, from the second device, identification information corresponding to the second device, based on the communication connection to the second device, and when a second approach or contact with the short-range communication tag is identified, store, in the short-range communication tag, the identification information corresponding to the second device.

## Description

### Technical Field

The disclosure relates to an electronic device and an operating method thereof, and more particularly, to a method of connecting electronic devices to each other by using a short-range communication tag, and an electronic device performing the method.

### Background Art

With the development of multimedia and network technologies, electronic devices are communicably connected to each other and transmit and receive various types of information to and from each other, thereby providing various services to users. Accordingly, a technology enabling an electronic device to efficiently authenticate another electronic device, and a technology enabling an electronic device to effectively provide appropriate information to another electronic device have been developed. For example, electronic devices may be connected to each other by obtaining information about another electronic device through a short-range communication tag, and transmit and receive data at a close distance.

A short-range communication tag may read and write data of an electronic device by coming into contact or approaching the electronic device, without a separate power source. In order to connect several electronic devices to each other by using the short-range communication tag, identification information of an electronic device (e.g., address information of the electronic device and a shared key for authenticating a control authority of the electronic device) needs to be stored in the short-range communication tag. It is difficult to automate a process storing the information of the electronic device in the short-range communication tag during a manufacturing process of the electronic device. Even if the process of storing the information of the electronic device in the short-range communication tag is automated, additional costs may be incurred due to installation in the manufacturing process.

### Disclosure of Invention

### Solution to Problem

Provided are a first device for storing identification information of a second device in a short-range communication tag, and an operating method of the first device.

An operating method of a first device, according to an aspect of the disclosure, may include, when a first approach or contact with a short-range communication tag is identified, obtaining identification information corresponding to an application from the short-range communication tag. The operating method may include performing a communication connection to a second device according to the application executed based on the identification information corresponding to the application. The operating method may include obtaining, from the second device, identification information corresponding to the second device, based on the communication connection to the second device. The operating method may include, when a second approach or contact with the short-range communication tag is identified, storing, in the short-range communication tag, the identification information corresponding to the second device.

A first device according to an aspect of the disclosure may include a communication interface, memory storing at least one instruction, and at least one processor including processing circuitry. The at least one instruction, when executed by the at least one processor individually or collectively, may cause the first device to, when a first approach or contact with a short-range communication tag is identified, obtain identification information corresponding to an application from the short-range communication tag. The at least one instruction, when executed by the at least one processor individually or collectively, may cause the first device to perform a communication connection to a second device according to the application executed based on the identification information corresponding to the application. The at least one instruction, when executed by the at least one processor individually or collectively, may cause the first device to obtain, from the second device, identification information corresponding to the second device, based on the communication connection to the second device. The at least one instruction, when executed by the at least one processor individually or collectively, may cause the first device to, when a second approach or contact with the short-range communication tag is identified, store, in the short-range communication tag, the identification information corresponding to the second device.

A computer-readable recording medium may have recorded thereon at least one instruction, according to an embodiment of the disclosure, wherein the at least one instruction, when executed by at least one processor of an electronic device, may cause the electronic device to, when a first approach or contact with a short-range communication tag is identified, obtain identification information corresponding to an application from the short-range communication tag, perform a communication connection to a second device according to the application executed based on the identification information corresponding to the application, obtain, from the second device, identification information corresponding to the second device, based on the communication connection to the second device, and when a second approach or contact with the short-range communication tag is identified, store, in the short-range communication tag, the identification information corresponding to the second device.

### Brief Description of Drawings

The disclosure may be easily understood by a combination of the following detailed descriptions and accompanying drawings, and reference numerals refer to structural elements.
FIG. 1 is a reference diagram showing an example of a first device for storing, in a short-range communication tag, identification information corresponding to a second device, according to one or more embodiments of the disclosure.
FIG. 2 is a block diagram showing a configuration of an electronic device, according to one or more embodiments of the disclosure.
FIG. 3 is a flowchart of a method of storing, in a short-range communication tag, identification information corresponding to a second device, according to one or more embodiments of the disclosure.
FIG. 4 is a flowchart for describing a detailed operation in which a first device performs a communication connection to a second device according to an application executed by identification information corresponding to the application, included in operation 320, according to one or more embodiments of the disclosure.
FIG. 5 is a flowchart for describing detailed operations in which a first device obtains, from a second device, identification information corresponding to the second device, based on a communication connection between the first device and the second device, included in operation 330, according to one or more embodiments of the disclosure.
FIG. 6 is a flowchart for describing an operation in which a first device outputs a guide corresponding to a request to approach or contact the first device with a short-range communication tag, according to one or more embodiments of the disclosure.
FIG. 7 is a flowchart for describing detailed operations performed by a first device depending on whether an application is installed in the first device, according to one or more embodiments of the disclosure.
FIG. 8 is a flowchart for describing an operating method between a first device, a short-range communication tag, and a second device, according to one or more embodiments of the disclosure.
FIG. 9 is a reference diagram for describing an operating method between a first device, a short-range communication tag, and a second device, according to one or more embodiments of the disclosure.
FIG. 10 is a flowchart for describing a detailed operation in which a first device performs a communication connection to a second device according to an application executed according to identification information corresponding to the application, included in operation 320, according to one or more embodiments of the disclosure.
FIG. 11 is a flowchart for describing detailed operations in which a first device obtains, from a second device, identification information corresponding to the second device, based on a communication connection between the first device and the second device, included in operation 330, according to one or more embodiments of the disclosure.
FIG. 12 is a flowchart for describing an operating method between a first device, a short-range communication tag, a second device, and a peripheral device, according to one or more embodiments of the disclosure.
FIG. 13 is a reference diagram for describing an operating method between a first device, a short-range communication tag, a second device, and a peripheral device, according to one or more embodiments of the disclosure.
FIG. 14 is a flowchart for describing an operating method between a second device, a short-range communication tag, and a third device, according to one or more embodiments of the disclosure.
FIG. 15 is a reference diagram for describing an operating method between a second device, a short-range communication tag, and a third device, according to one or more embodiments of the disclosure.

### Mode for the Invention

It should be understood that various embodiments of the disclosure and the terms used herein are not intended to limit the technical features described in the disclosure to specific embodiments of the disclosure, and include various modifications, equivalents, or alternatives of corresponding embodiments of the disclosure.

In relation to the description of drawings, like reference numerals may denote like or related elements. The singular form of a noun corresponding to an item may include one or more of items, unless the context clearly indicates otherwise.

In the disclosure, each of the phrases "A or B", "at least one of A and B", "at least one of A or B", "A, B, or C", "at least one of A, B, and C", and "at least one of A, B, or C" may include one of the items listed together in the phrase or all possible combinations of the items.

The term "and/or" includes a combination of a plurality of related components or one component from among the plurality of related components.

The terms such as "first" and "second" may be used to distinguish one component from another component, and do not limit the components in another aspect (e.g., importance or order).

When a component (e.g., a first component) is referred to as being "coupled" or "connected" to another component (e.g., a second component), with or without the term "functionally" or "communicably," the component may be connected to the other component directly (e.g., wired), wirelessly, or through a third component.

The terms such as "including" or "having", etc., are intended to indicate the existence of the features, numbers, steps, actions, components, parts, or combinations thereof described in the disclosure, and are not intended to preclude the possibility that one or more other features, numbers, steps, actions, components, parts, or combinations thereof may exist or may be added.

When a component is "connected," "coupled," "supported," or "in contact with" another component, not only the components are directly connected, coupled, supported, or in contact with each other, but also the components are indirectly connected, coupled, supported, or in contact with each other through a third component.

When a component is "on" another component, not only the component is in contact with the other component, but also an intervening component may be present between the two components.

It should be understood that combinations of blocks in each flowchart and combinations of flowcharts may be performed by one or more computer programs including computer-executable instructions. One or more computer programs may be stored entirely in single memory or may be divided and stored in a plurality of different memories.

An embodiment of the disclosure may be represented by functional block configurations and various processing operations. Some or all of these functional blocks may be implemented by various numbers of hardware and/or software configurations that perform particular functions. For example, the functional blocks of the disclosure may be implemented by one or more microprocessors or by circuitry for a certain function. Also, for example, the functional blocks of the disclosure may be implemented in various programming or scripting languages. The functional blocks may be implemented by algorithms executed in one or more processors. In addition, the disclosure may employ general techniques for electronic environment setting, signal processing, and/or data processing.

All functions or operations including a function related to artificial intelligence according to the disclosure operate through a processor and memory. The processor may be configured as one or more processors. A processor or a combination of processors may include processing circuitry configured to perform processing, such as an application processor (AP), a communication processor (CP), a graphics processing unit (GPU), a neural processing unit (NPU), a microprocessor unit (MPU), a system-on-chip (SoC), or an integrated chip (IC).

Features described with reference to one embodiment may be combined with features from another embodiment without introducing new subject-matter.

Hereinafter, the disclosure will be described in detail with reference to accompanying drawings.

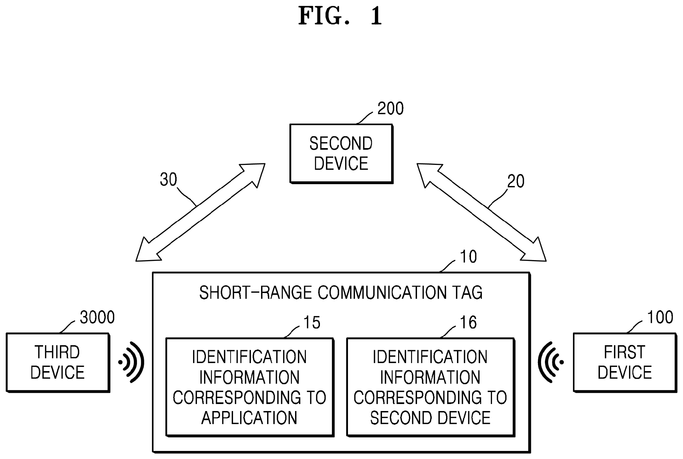

FIG. 1 is a reference diagram showing an example of a first device 100 for storing, in a short-range communication tag 10, identification information corresponding to a second device 200, according to an embodiment of the disclosure.

Referring to FIG. 1, a system may include the first device 100, the second device 200, a third device 3000, and the short-range communication tag 10. In an embodiment of the disclosure, the first device 100 may be connected to the second device 200, the third device 3000, and/or the short-range communication tag 10. In an embodiment of the disclosure, the second device 200 may be connected to the first device 100, the third device 3000, and/or the short-range communication tag 10. In an embodiment of the disclosure, the third device 3000 may be connected to the first device 100, the second device 200, and/or the short-range communication tag 10. In an embodiment of the disclosure, the short-range communication tag 10 may be connected to the first device 100, the second device 200, and/or the third device 3000. In an embodiment of the disclosure, the first device 100, the second device 200, the third device 3000, and/or the short-range communication tag 10 may be connected to at least one device and transmit/receive data.

In an embodiment of the disclosure, the first device 100, the second device 200, and/or the third device 3000 may store or write data on the short-range communication tag 10. For example, the first device 100, the second device 200, and/or the third device 3000 may store data by approaching or coming into contact with the short-range communication tag 10.

The short-range communication tag 10 may store various types of data. For example, the short-range communication tag 10 may store identification information of an electronic device (e.g., the first device 100, the second device 200, and/or the third device 3000). For example, the short-range communication tag 10 may store an Internet address, user authentication and security information, product and asset information, payment and financial information, location and tracking information, Wi-Fi/Bluetooth settings, and smartphone setup command.

In an embodiment of the disclosure, the first device 100, the second device 200, and/or the third device 3000 may read or obtain data stored in the short-range communication tag 10. For example, the first device 100, the second device 200, and/or the third device 3000 may read an Internet address stored in the short-range communication tag 10 to be connected to (e.g., redirected to) the Internet address. For example, the first device 100, the second device 200, and/or the third device 3000 may read identification information of an electronic device, stored in the short-range communication tag 10, to be connected to the electronic device corresponding to the identification information.

In an embodiment of the disclosure, when identification information of at least one electronic device is included in the short-range communication tag 10, another electronic device may be connected to an electronic device corresponding to the identification information of at least one electronic device, by using the short-range communication tag 10. For example, when the short-range communication tag 10 includes identification information of the second device 200, the first device 100 may be connected to the second device 200 by coming into contact with or approaching the short-range communication tag 10 and obtaining the identification information of the second device 200. For example, the identification information of the second device 200 may include address information of the second device 200 or a control authority authentication key of the second device 200.

In an embodiment of the disclosure, identification information of at least one electronic device from among a plurality of electronic devices may be stored in the short-range communication tag 10 during a manufacturing process of an electronic device. For example, the identification information of the second device 200 may be stored in the short-range communication tag 10 during a manufacturing process of the second device 200.

However, it may be difficult to automate a process of obtaining identification information of an electronic device during a manufacturing process of the electronic device (e.g., the first device 100, the second device 200, and/or the third device 3000). For example, when various electronic devices are manufactured on a production line, a separate process may need to be added to assign distinct identification information to each device and obtain the distinct identification information. Also, in order to automate a process of obtaining identification information of each electronic device, a system for accurately classifying and processing identification information for each electronic device may be required. It may be difficult to automate a manufacturing process when intervention of a user is required during a process of inputting identification information of each electronic device to a short-range communication tag. When separate equipment for obtaining identification information of each electronic device is installed or software is additionally realized, complexity of a manufacturing process may greatly increase.

Even when a process of obtaining identification information of each electronic device is automated, additional costs may be incurred due to installation of an additional process during a manufacturing process of an electronic device. For example, costs may be incurred while integrating a dedicated device (e.g., a scammer or a data processing module) for automatically collecting identification information of an electronic device with a production line. For example, additional costs may be incurred when reconstructing a production line while integrating a new process with an existing manufacturing process of an electronic device.

Even when identification information of an electronic device is obtained during a manufacturing process of the electronic device, it may be difficult to automate a process of storing the identification information in a short-range communication tag. For example, intervention of a user may be required so as to store information in the short-range communication tag, during a manufacturing process. Also, the total manufacturing speed of the electronic device may decrease when the time taken to store the information in the short-range communication tag is added For example, in order to store the information in the short-range communication tag during the manufacturing process, a separate near-field communication (NFC) or radio frequency identification (RFID) writing device for writing information on the short-range communication tag is required, and thus, the manufacturing process may become complicated.

In an embodiment of the disclosure, the first device 100 may store, in the short-range communication tag 10, the identification information corresponding to the second device 200. For example, the user may store, in the short-range communication tag 10, the identification information corresponding to the second device 200 after the manufacturing process of the second device 200, by using the first device 100. For example, the user may use the first device 100 to directly program the short-range communication tag 10.

In an embodiment of the disclosure, based on recognizing approach or contact of the first device 100 with the short-range communication tag 10, the first device 100 may obtain or read identification information 15 corresponding to an application from the short-range communication tag 10. The application may be an application for controlling the second device 200. The identification information 15 may be a web address (uniform resource locator (URL)) connected to the application. The identification information 15 may be stored in the short-range communication tag 10 during a process of manufacturing, distributing, or selling the second device 200. In an embodiment, the short-range communication tag 10 may be manufactured, distributed, or sold separately from the second device 200. In this case, the identification information 15 may be stored in the short-range communication tag 10 during a process of manufacturing, distributing, or selling the short-range communication tag 10.

In an embodiment of the disclosure, the first device 100 may perform communication connection 20 to the second device 200 through the application executed by the identification information 15.

For example, the first device 100 may execute the application to transmit (e.g., advertise) a signal including content requesting an image corresponding to authentication including identification information 16 corresponding to the second device 200. Upon receiving the signal transmitted by the first device 100, the second device 200 may output the image corresponding to the authentication including the identification information 16. The identification information 16 may correspond to at least one of a media access control (MAC) address of the second device 200 or a shared key of the second device 200.

For example, the first device 100 may execute the application to identify signals corresponding to advertisements (e.g. transmissions), transmitted from peripheral devices. The first device 100 may identify, among the signals corresponding to the advertisements, transmitted from the peripheral devices, a signal corresponding to an advertisement, transmitted from the second device 200. The first device 100 may obtain the identification information 16 from the signal corresponding to the advertisement, transmitted from the second device 200. The identification information 16 may include at least one of a device name, an MAC address, or a universal unique identifier (UUID) of the second device 200.

In an embodiment of the disclosure, the first device 100 may obtain, from the second device 200, the identification information 16, based on the communication connection 20 to the second device 200.

For example, the first device 100 may obtain the identification information 16 by scanning the image corresponding to the authentication including the identification information 16. The first device 100 may output a guide corresponding to a request to approach or contact the first device 100 with the short-range communication tag 10. The guide may comprise a direction or instruction.

For example, the first device 100 may obtain data related to the peripheral devices, based on the signals corresponding to the advertisements, transmitted from the peripheral devices. When the data related to the peripheral devices includes the second device 200, the first device 100 may request the second device 200 for the identification information 16. The first device 100 may obtain (or receive) the identification information 16 from the second device 200.

In an embodiment of the disclosure, based on identifying the approach or contact of the first device 100 with the short-range communication tag 10, the first device 100 may store the identification information 16 in the short-range communication tag 10.

In an embodiment of the disclosure, the identification information 16 may be stored in the short-range communication tag 10 without having to change a manufacturing process of an electronic device. For example, it is not required to add a new process to the manufacturing process or modify an existing process so as to store the identification information 16 in the short-range communication tag 10, and thus, efficiency and stability of a production line may be maintained.

In addition, because the user may freely program the short-range communication tag 10, a same method may be applied to various types of electronic devices and tags, and thus, technical expandability and compatibility may be increased. For example, because the short-range communication tag 10 may be overwritten several times, identification information corresponding to a device, pre-stored in the short-range communication tag 10, may be deleted and distinct identification information corresponding to another device may be written, according to the user's preference. Accordingly, usability and user convenience of the short-range communication tag 10 may be increased.

In an embodiment of the disclosure, the third device 3000 may perform connection 30 to the second device 200, based on the identification information 16 stored in the short-range communication tag 10. The third device 3000 may be the first device 100 or any other device. The third device 3000 may approach or come into contact with the short-range communication tag 10. When the third device 3000 approaches or comes into contact with the short-range communication tag 10, the identification information 15 and the identification information 16 may be obtained.

The third device 3000 may perform at least one of installation or execution of the application corresponding to the identification information 15. Based on identifying a first function from the application, the third device 3000 may be connected to the second device 200. For example, the third device 3000 may perform the connection 30 to the second device 200, based on the identification information 16.

For example, the user may execute the application of the third device 3000 and select the first function. Because the application is an application for controlling the second device 200, the first function may be a function performed in relation to the second device 200. When the first function is identified from the application executed on the third device 3000, the third device 3000 may control the second device 200. For example, an operation related to the first function identified by the third device 3000 may be performed in the second device 200.

In an embodiment of the disclosure, the third device 3000 may be connected to the second device 200 by tagging (e.g. contacting or approaching) the short-range communication tag 10 and control functions of the second device 200. Accordingly, convenience of connection between devices may be increased. Thus, the second device 200 may be easily controlled by the third device 3000. Thus, user experience may be increased.

In an embodiment of the disclosure, the third device 3000 may come into contact with or approach a plurality of short-range communication tags to be easily connected to (or to switch a connection between) a plurality of different electronic devices, and control functions of each electronic device. For example, the third device 3000 may come into contact or approach a first short-range communication tag storing identification information corresponding to the first device 100, obtain the identification information corresponding to the first device 100, identify a function of the first device 100 from an application, and connect to the first device 100. For example, the third device 3000 may come into contact or approach a second short-range communication tag storing the identification information 16, obtain the identification information 16, identify a function of the second device 200 from an application, and connect to the second device 200.

Hereinafter, a method by which the first device 100 according to an embodiment of the disclosure stores the identification information 16 in the short-range communication tag 10, and a method by which the third device 3000 connects to the second device 200 through the short-range communication tag 10 will be described in detail.

In details described above with reference to FIG. 1 and details described below with reference to FIGS. 1 to 15, the first device 100, the second device 200, and the third device 3000 are names assigned randomly to refer to a plurality of electronic devices, and the disclosure is not limited thereby. For example, an operation described to be performed by the first device 100 in the disclosure may be performed by the second device 200 and/or the third device 3000. For example, an operation described to be performed by the second device 200 in the disclosure may be performed by the first device 100 and/or the third device 3000. For example, an operation described to be performed by the third device 3000 in the disclosure may be performed by the first device 100 and/or the second device 200.

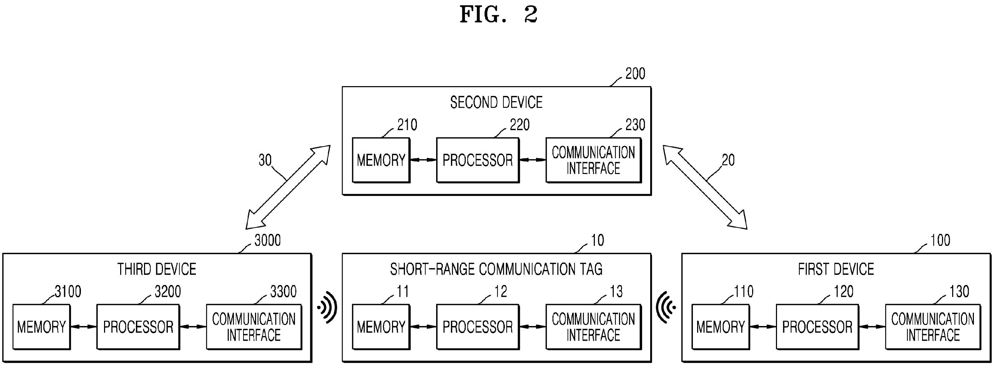

FIG. 2 illustrates an example of a system including the first device 100, the second device 200, the third device 3000, and the short-range communication tag 10, according to an embodiment of the disclosure.

In an embodiment of the disclosure, the first device 100 is a device for displaying an image or data according to a request of the user, and may include memory 110, a processor 120, and a communication interface 130.

The first device 100 may be implemented in various forms. The first device 100 may be any type of device that performs a function by including the processor 120 and the memory 110. The first device 100 may be a stationary type or portable type device. For example, the first device 100 may refer to a device for displaying image content, video content, game content, graphics content, or the like by including a display. The first device 100 may include any type of electronic device capable of receiving and outputting content, for example, a television (TV) such as a network TV, a smart TV, an Internet TV, a web TV, or an internet protocol (IP) TV, a computer such as a desktop computer, a laptop computer, or a tablet computer, or a smart device such as a smartphone, a cellular phone, a game player, a music player, a video player, a medical device, or a home appliance. The first device 100 is referred to as the first device 100 to be distinguished from the second device 200 or the third device 3000 included in the system, and may also be referred to as an electronic device, a computing device, or the like.

The memory 110 may store programs for processes and controls by the processor 120 and may store data input to or output from the first device 100. Also, the memory 110 may store pieces of data required for operations of the first device 100.

The memory 110 may include at least one type of storage medium among flash memory type memory, hard disk type memory, multimedia card micro type memory, card type memory (for example, secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disk, and an optical disk.

The memory 110 may not be present separately but may be included in the processor 120. The memory 110 may be configured as volatile memory, non-volatile memory, or a combination of volatile memory and non-volatile memory. The memory 110 may store a program or at least one instruction for performing operations according to embodiments of the disclosure described below. The memory 110 may provide stored data to the processor 120 according to a request of the processor 120.

The processor 120 controls general operations of the first device 100. The processor 120 controls a series of processes such that the first device 100 operates according to embodiments of the disclosure described below, and may include one or more processors. The one or more processors included in the processor 120 may be processing circuitry such as a system-on-chip (SoC) or an integrated circuit (IC). The one or more processors included in the processor 120 may include a general-purpose processor, such as a central processing unit (CPU), a micro-processor unit (MPU), an application processor (AP), or a digital signal processor (DSP), a graphics dedicated processor, such as a graphics processing unit (GPU) or a vision processing unit (VPU), an artificial intelligence dedicated processor, such as a neural processing unit (NPU), or a communication dedicated processor, such as a communication processor (CP). When the one or more processors included in the processor 120 are an artificial intelligence dedicated processor, the artificial intelligence dedicated processor may be designed in a hardware structure specialized for processing of a specific artificial intelligence model.

The processor 120 may write data on the memory 110 or read data stored in the memory 110, and in particular, may execute the at least one instruction or the program stored in the memory 110 to process data according to a pre-defined operating rule or an artificial intelligence model. The processor 120 may perform operations described in embodiments of the disclosure below, and unless described specifically, it may be assumed that operations described to be performed by the first device 100 in embodiments of the disclosure below are performed by the processor 120.

For example, the processor 120 may individually or collectively execute the at least one instruction stored in the memory 110 to perform a function of the first device 100 described in the disclosure. Alternatively, the first device 100 may perform a function described in the disclosure when the at least one instruction stored in the memory 110 is individually or collectively executed by the processor 120, according to an embodiment of the disclosure.

The communication interface 130 may perform communication with at least one electronic device. Here, "communication" may indicate an operation of transmitting and/or receiving data, a signal, a request, and/or a command. The communication interface 130 may perform wired or wireless communication with the at least one electronic device. The first device 100 may perform communication with at least one of the second device 200, the third device 3000, or the short-range communication tag 10 through the communication interface 130.

For example, the communication interface 130 may include at least one of a communication module, communication circuitry, a communication device, an input/output port, and an input/output plug, which are for performing the wired or wireless communication with the at least one electronic device. For example, the communication interface 130 may include at least one wireless communication module, at least one wireless communication circuitry, or at least one wireless communication device, which perform wireless communication with the at least one electronic device.

For example, the communication interface 130 may include a short-range communication module, for example, an infrared (IR) communication module, capable of receiving a control command from a remote controller located in close proximity. In this case, the communication interface 130 may receive a control signal from the remote controller.

For example, the communication interface 130 may include at least one communication module performing communication according to the wireless communication standard, such as Bluetooth, Wi-Fi, Bluetooth low energy (BLE), near field communication (NFC), radio frequency identification (RFID), Wi-Fi direct, ultra-wideband (UWB), or ZigBee. The communication interface 130 may further include a communication module performing communication with a server for supporting long-range communication according to the long-range communication standard. For example, the communication interface 130 may include a communication module performing communication through a network for Internet communication. Also, the communication interface 130 may include a communication module performing communication through a communication network according to the communication standard, such as 3G, 4G, 5G, and/or 6G.

In an embodiment of the disclosure, the processor 120 may individually or collectively execute at least one instruction stored in the memory 110 to, when approach or contact with the short-range communication tag 10 is identified, obtain identification information corresponding to an application from the short-range communication tag 10.

In an embodiment of the disclosure, the processor 120 may individually or collectively execute the at least one instruction stored in the memory 110 to perform the communication connection 20 to the second device 200 according to the application executed by the identification information corresponding to the application.

In an embodiment of the disclosure, the processor 120 may individually or collectively execute the at least one instruction stored in the memory 110 to obtain, from the second device 200, identification information corresponding to the second device 200, based on the communication connection 20 to the second device 200.

In an embodiment of the disclosure, the identification information corresponding to the second device 200 may include at least one of an MAC address of the second device 200 or a shared key of the second device 200.

In an embodiment of the disclosure, the processor 120 may individually or collectively execute the at least one instruction stored in the memory 110 to, when the approach or contact of the first device 100 with the short-range communication tag 10 is identified, store the identification information corresponding to the second device 200 in the short-range communication tag 10.

In an embodiment of the disclosure, the processor 120 may individually or collectively execute the at least one instruction stored in the memory 110 to, by executing the application, transmit data including content requesting an image corresponding to authentication including the identification information corresponding to the second device 200.

In an embodiment of the disclosure, the processor 120 may individually or collectively execute the at least one instruction stored in the memory 110 to obtain, from the second device 200, the image corresponding to the authentication including the identification information corresponding to the second device 200.

In an embodiment of the disclosure, the processor 120 may individually or collectively execute the at least one instruction stored in the memory 110 to obtain the identification information corresponding to the second device 200, based on the image corresponding to the authentication.

In an embodiment of the disclosure, the processor 120 may individually or collectively execute the at least one instruction stored in the memory 110 to, based on the obtaining of the identification information corresponding to the second device 200, output a guide corresponding to a request to approach or contact the first device 100 with the short-range communication tag 10.

In an embodiment of the disclosure, the processor 120 may individually or collectively execute the at least one instruction stored in the memory 110 to install the application when the application according to the identification information corresponding to the application is not installed in the first device 100.

In an embodiment of the disclosure, the processor 120 may individually or collectively execute the at least one instruction stored in the memory 110 to identify signals corresponding to advertisements transmitted from peripheral devices by executing the application.

In an embodiment of the disclosure, the processor 120 may individually or collectively execute the at least one instruction stored in the memory 110 to obtain the identification information corresponding to the second device 200 from a signal corresponding to an advertisement transmitted from the second device 200 among the signals corresponding to the advertisements transmitted from the peripheral devices.

In an embodiment of the disclosure, the processor 120 may individually or collectively execute the at least one instruction stored in the memory 110 to obtain data related to the peripheral devices, based on the signals corresponding to the advertisements transmitted from the peripheral devices.

In an embodiment of the disclosure, the processor 120 may individually or collectively execute the at least one instruction stored in the memory 110 to, when the data related to the peripheral devices includes the second device 200, request the second device 200 for the identification information corresponding to the second device 200.

In an embodiment of the disclosure, the processor 120 may individually or collectively execute the at least one instruction stored in the memory 110 to obtain, from the second device 200, the identification information corresponding to the second device 200.

In an embodiment of the disclosure, the second device 200 is a device for displaying an image or data according to a request of the user, and may include memory 210, a processor 220, and a communication interface 230.

The second device 200 may be implemented in various forms. The second device 200 may be any type of device that performs a function by including the processor 220 and the memory 210. The second device 200 may be a stationary type or portable type device. For example, the second device 200 may refer to a device for displaying image content, video content, game content, graphics content, or the like by including a display. The second device 200 may include any type of electronic device capable of receiving and outputting content, for example, a TV such as a network TV, a smart TV, an Internet TV, a web TV, or an IP TV, a computer such as a desktop computer, a laptop computer, or a tablet computer, or a smart device such as a smartphone, a cellular phone, a game player, a music player, a video player, a medical device, or a home appliance. The second device 200 is referred to as the second device 200 to be distinguished from the first device 100 or the third device 3000 included in the system, and may also be referred to as an electronic device, a content providing device, a computing device, or the like.

The memory 210 may store programs for processes and controls by the processor 220 and may store data input to or output from the second device 200. Also, the memory 210 may store pieces of data required for operations of the second device 200.

The memory 210 may include at least one type of storage medium among flash memory type memory, hard disk type memory, multimedia card micro type memory, card type memory (for example, SD or XD memory), RAM, SRAM, ROM, EEPROM, PROM, magnetic memory, a magnetic disk, and an optical disk.

The memory 210 may not be present separately but may be included in the processor 220. The memory 210 may be configured as volatile memory, non-volatile memory, or a combination of volatile memory and non-volatile memory. The memory 210 may store a program or at least one instruction for performing operations according to embodiments of the disclosure described below. The memory 210 may provide stored data to the processor 220 according to a request of the processor 220.

The processor 220 controls general operations of the second device 200. The processor 220 controls a series of processes such that the second device 200 operates according to embodiments of the disclosure described below, and may include one or more processors. The one or more processors included in the processor 220 may be processing circuitry such as an SoC or an IC. The one or more processors included in the processor 220 may include a general-purpose processor, such as a CPU, an MPU, an AP, or a DSP, a graphics dedicated processor, such as a GPU or a VPU, an artificial intelligence dedicated processor, such as an NPU, or a communication dedicated processor, such as a CP. When the one or more processors included in the processor 220 are an artificial intelligence dedicated processor, the artificial intelligence dedicated processor may be designed in a hardware structure specialized for processing of a specific artificial intelligence model.

The processor 220 may write data on the memory 210 or read data stored in the memory 210, and in particular, may execute the at least one instruction or the program stored in the memory 210 to process data according to a pre-defined operating rule or an artificial intelligence model. The processor 220 may perform operations described in embodiments of the disclosure below, and unless described specifically, it may be assumed that operations described to be performed by the second device 200 in embodiments of the disclosure below are performed by the processor 220.

For example, the processor 220 may individually or collectively execute the at least one instruction stored in the memory 210 to perform a function of the second device 200 described in the disclosure. Alternatively, the second device 200 may perform a function described in the disclosure when the at least one instruction stored in the memory 110 is individually or collectively executed by the processor 220, according to an embodiment of the disclosure.

The communication interface 230 may perform communication with at least one electronic device. Here, "communication" may indicate an operation of transmitting and/or receiving data, a signal, a request, and/or a command. The communication interface 230 may perform wired or wireless communication with the at least one electronic device. The second device 200 may perform communication with at least one of the first device 100, the third device 3000, or the short-range communication tag 10 through the communication interface 230.

For example, the communication interface 230 may include at least one of a communication module, communication circuitry, a communication device, an input/output port, and an input/output plug, which are for performing the wired or wireless communication with the at least one electronic device. For example, the communication interface 230 may include at least one wireless communication module, at least one wireless communication circuitry, or at least one wireless communication device, which perform wireless communication with the at least one electronic device.

For example, the communication interface 230 may include a short-range communication module, for example, an IR communication module, capable of receiving a control command from a remote controller located in close proximity. In this case, the communication interface 230 may receive a control signal from the remote controller.

For example, the communication interface 230 may include at least one communication module performing communication according to the wireless communication standard, such as Bluetooth, Wi-Fi, BLE, NFC, RFID, Wi-Fi direct, UWB, or ZigBee. The communication interface 230 may further include a communication module performing communication with a server for supporting long-range communication according to the long-range communication standard. For example, the communication interface 230 may include a communication module performing communication through a network for Internet communication. Also, the communication interface 230 may include a communication module performing communication through a communication network according to the communication standard, such as 3G, 4G, 5G, and/or 6G.

In an embodiment of the disclosure, the processor 220 may individually or collectively execute the at least one instruction stored in the memory 210 to perform the communication connection 20 to the first device 100 according to the application executed by the first device 100.

In an embodiment of the disclosure, the processor 220 may individually or collectively execute the at least one instruction stored in the memory 210 to transmit, to the first device 100, the identification information corresponding to the second device 200, based on the communication connection 20 to the first device 100.

In an embodiment of the disclosure, the processor 220 may individually or collectively execute the at least one instruction stored in the memory 210 to obtain the signal including the content requesting the image corresponding to the authentication including the identification information corresponding to the second device 200, advertised by the first device 100.

In an embodiment of the disclosure, the processor 220 may individually or collectively execute the at least one instruction stored in the memory 210 to output the image corresponding to the authentication including the identification information corresponding to the second device 200.

In an embodiment of the disclosure, the processor 220 may individually or collectively execute the at least one instruction stored in the memory 210 to transmit, to the first device 100, the image corresponding to the authentication including the identification information corresponding to the second device 200.

In an embodiment of the disclosure, the processor 220 may individually or collectively execute the at least one instruction stored in the memory 210 to transmit (or advertise) data related to the second device 200.

In an embodiment of the disclosure, the processor 220 may individually or collectively execute the at least one instruction stored in the memory 210 to transmit, to the first device 100, the identification information corresponding to the second device 200. In an embodiment of the disclosure, the processor 220 may individually or collectively execute the at least one instruction stored in the memory 210 to transmit, to the first device 100, the identification information corresponding to the second device 200, in response to an operation of the first device 100 requesting the identification information corresponding to the second device 200.

In an embodiment of the disclosure, the processor 220 may individually or collectively execute the at least one instruction stored in the memory 210 to perform the connection 30 to the third device 3000. In an embodiment of the disclosure, the processor 220 may individually or collectively execute the at least one instruction stored in the memory 210 to perform the first function by being connected to the third device 3000.

In an embodiment of the disclosure, the third device 3000 is a device for displaying an image or data according to a request of the user, and may include memory 3100, a processor 3200, and a communication interface 3300.

The third device 3000 may be implemented in various forms. The third device 3000 may be any type of device that performs a function by including the processor 3200 and the memory 3100. The third device 3000 may be a stationary type or portable type device. For example, the third device 3000 may refer to a device for displaying image content, video content, game content, graphics content, or the like by including a display. The third device 3000 may include any type of electronic device capable of receiving and outputting content, for example, a TV such as a network TV, a smart TV, an Internet TV, a web TV, or an IP TV, a computer such as a desktop computer, a laptop computer, or a tablet computer, or a smart device such as a smartphone, a cellular phone, a game player, a music player, a video player, a medical device, or a home appliance. The third device 3000 is referred to as the third device 3000 to be distinguished from the first device 100 or the second device 200 included in the system, and may also be referred to as an electronic device, a content providing device, a computing device, or the like.

The memory 3100 may store programs for processes and controls by the processor 3200 and may store data input to or output from the third device 3000. Also, the memory 3100 may store pieces of data required for operations of the third device 3000.

The memory 3100 may include at least one type of storage medium among flash memory type memory, hard disk type memory, multimedia card micro type memory, card type memory (for example, SD or XD memory), RAM, SRAM, ROM, EEPROM, PROM, magnetic memory, a magnetic disk, and an optical disk.

The memory 3100 may not be present separately but may be included in the processor 3200. The memory 3100 may be configured as volatile memory, non-volatile memory, or a combination of volatile memory and non-volatile memory. The memory 110 may store a program or at least one instruction for performing operations according to embodiments of the disclosure described below. The memory 3100 may provide stored data to the processor 3200 according to a request of the processor 3200.

The processor 3200 controls general operations of the third device 3000. The processor 3200 controls a series of processes such that the third device 3000 operates according to embodiments of the disclosure described below, and may include one or more processors. The one or more processors included in the processor 3200 may be circuitry such as an SoC or an IC. The one or more processors included in the processor 3200 may include a general-purpose processor, such as a CPU, an MPU, an AP, or a DSP, a graphics dedicated processor, such as a GPU or a VPU, an artificial intelligence dedicated processor, such as an NPU, or a communication dedicated processor, such as a CP. When the one or more processors included in the processor 3200 is an artificial intelligence dedicated processor, the artificial intelligence dedicated processor may be designed in a hardware structure specialized for processing of a specific artificial intelligence model.

The processor 3200 may write data on the memory 3100 or read data stored in the memory 3100, and in particular, may execute the at least one instruction or the program stored in the memory 3100 to process data according to a pre-defined operating rule or an artificial intelligence model. The processor 3200 may perform operations described in embodiments of the disclosure below, and unless described specifically, it may be assumed that operations described to be performed by the third device 3000 in embodiments of the disclosure below are performed by the processor 3200.

For example, the processor 3200 may individually or collectively execute the at least one instruction stored in the memory 3100 to perform a function of the third device 3000 described in the disclosure. Alternatively, the third device 3000 may perform a function described in the disclosure when the at least one instruction stored in the memory 3100 is individually or collectively executed by the processor 3200, according to an embodiment of the disclosure.

The communication interface 3300 may perform communication with at least one electronic device. Here, "communication" may indicate an operation of transmitting and/or receiving data, a signal, a request, and/or a command. The communication interface 3300 may perform wired or wireless communication with the at least one electronic device. The third device 3000 may perform communication with at least one of the first device 100, the second device 200, or the short-range communication tag 10 through the communication interface 3300.

For example, the communication interface 3300 may include at least one of a communication module, communication circuitry, a communication device, an input/output port, and an input/output plug, which are for performing the wired or wireless communication with the at least one electronic device. For example, the communication interface 3300 may include at least one wireless communication module, at least one wireless communication circuitry, or at least one wireless communication device, which perform wireless communication with the at least one electronic device.

For example, the communication interface 3300 may include a short-range communication module, for example, an IR communication module, capable of receiving a control command from a remote controller located in close proximity. In this case, the communication interface 3300 may receive a control signal from the remote controller.

For example, the communication interface 3300 may include at least one communication module performing communication according to the wireless communication standard, such as Bluetooth, Wi-Fi, BLE, NFC, RFID, Wi-Fi direct, UWB, or ZigBee. The communication interface 3300 may further include a communication module performing communication with a server for supporting long-range communication according to the long-range communication standard. For example, the communication interface 3300 may include a communication module performing communication through a network for Internet communication. Also, the communication interface 3300 may include a communication module performing communication through a communication network according to the communication standard, such as 3G, 4G, 5G, and/or 6G.

In an embodiment of the disclosure, the processor 3200 may individually or collectively execute the at least one instruction stored in the memory 3100 to recognize the approach or contact of the third device 3000 with the short-range communication tag 10.

In an embodiment of the disclosure, the processor 3200 may individually or collectively execute the at least one instruction stored in the memory 3100 to, when the approach or contact with the short-range communication tag 10 is identified, obtain the identification information corresponding to the application and the identification information corresponding to the second device 200 from the short-range communication tag 10.

In an embodiment of the disclosure, the processor 3200 may individually or collectively execute the at least one instruction stored in the memory 3100 to install the application corresponding to the identification information corresponding to the application. In an embodiment of the disclosure, the processor 3200 may individually or collectively execute the at least one instruction stored in the memory 3100 to execute the application corresponding to the identification information corresponding to the application.

In an embodiment of the disclosure, the processor 3200 may individually or collectively execute the at least one instruction stored in the memory 3100 to perform the connection 30 to the second device 200 according to the execution of the application.

In an embodiment of the disclosure, the processor 3200 may individually or collectively execute the at least one instruction stored in the memory 3100 to identify, from the application, the first function from a list of functions of the second device 200. In an embodiment of the disclosure, the processor 3200 may individually or collectively execute the at least one instruction stored in the memory 3100 to be connected to the second device 200 when the first function is identified from the application among the list of functions of the second device 200.

In an embodiment of the disclosure, the short-range communication tag 10 is a device for transmitting or receiving data through wireless communication at a close distance, and may include memory 11, a processor 12, and a communication interface 13.

The short-range communication tag 10 may be implemented in various forms. The short-range communication tag 10 may be any type of device that performs a function by including the processor 12 and the memory 11. The short-range communication tag 10 may be attached to an electronic device or may be spaced apart from the electronic device. For example, the short-range communication tag 10 may refer to a tag or a sticker capable of storing data and transmitting or receiving data to or from another electronic device.

The short-range communication tag 10 may include any type of device capable of simply transmitting and recognizing data at a close distance, such as an NFC tag, an NFC sticker, a quick response (QR) code sticker, an RFID tag, a beacon tag, or a ZigBee tag. The short-range communication tag 10 may be referred to as a short-range wireless communication tag, an NFC tag, or an NFC sticker. In the disclosure, only an example in which an NFC tag is applied is described for convenience of description, but the disclosure is not limited thereto.

The memory 11 may store programs for processes and controls by the processor 12 and may store data input to or output from the short-range communication tag 10. Also, the memory 11 may store pieces of data required for operations of the short-range communication tag 10.

The memory 11 may include at least one type of storage medium among flash memory type memory, hard disk type memory, multimedia card micro type memory, card type memory (for example, SD or XD memory), RAM, SRAM, ROM, EEPROM, PROM, magnetic memory, a magnetic disk, and an optical disk.

The memory 11 may not be present separately but may be included in the processor 12. The memory 11 may be configured as volatile memory, non-volatile memory, or a combination of volatile memory and non-volatile memory. The memory 11 may store a program or at least one instruction for performing operations according to embodiments of the disclosure described below. The memory 11 may provide stored data to the processor 12 according to a request of the processor 12.

The processor 12 controls general operations of the short-range communication tag 10. The processor 12 controls a series of processes such that the short-range communication tag 10 operates according to embodiments of the disclosure described below, and may include one or more processors. The processor 12 may control a process in which the short-range communication tag 10 operates in an activated state.

The one or more processors included in the processor 12 may be processing circuitry such as an SoC or an IC. The one or more processors included in the processor 12 may include a general-purpose processor, such as a CPU, an MPU, an AP, or a DSP, or a communication dedicated processor, such as a CP.

The processor 12 may write data on the memory 11 or read data stored in the memory 11, and in particular, may execute the at least one instruction or the program stored in the memory 11 to process data according to a pre-defined operating rule or an artificial intelligence model. The processor 12 may perform operations described in embodiments of the disclosure below, and unless described specifically, it may be assumed that operations described to be performed by the short-range communication tag 10 in embodiments of the disclosure below are performed by the processor 12.

For example, the processor 12 may individually or collectively execute the at least one instruction stored in the memory 11 to perform a function of the short-range communication tag 10 described in the disclosure. Alternatively, the short-range communication tag 10 may perform a function described in the disclosure when the at least one instruction stored in the memory 11 is individually or collectively executed by the processor 12, according to an embodiment of the disclosure.

In an embodiment of the disclosure, the processor 12 may individually or collectively execute the at least one instruction stored in the memory 11 to encode data stored in the memory 11 and safely transmit the same.

In an embodiment of the disclosure, the processor 12 may individually or collectively execute the at least one instruction stored in the memory 11 to control an operating state of the short-range communication tag 10. In an embodiment of the disclosure, the processor 12 may individually or collectively execute the at least one instruction stored in the memory 11 to cause the short-range communication tag 10 to switch to a standby mode or a state capable of transmitting or receiving data, depending on a connection to a short-range communication tag reader.

The communication interface 13 may perform communication with at least one electronic device. Here, "communication" may indicate an operation of transmitting and/or receiving data, a signal, a request, and/or a command. The communication interface 13 may perform wireless communication with at least one electronic device. The short-range communication tag 10 may perform communication with at least one of the first device 100, the second device 200, or the third device 3000 through the communication interface 13.

For example, the communication interface 13 may include at least one of a communication module, communication circuitry, a communication device, and an antenna, which are for performing wireless communication with the at least one electronic device. For example, the communication interface 13 may include at least one wireless communication module, at least one wireless communication circuitry, or at least one wireless communication device, which perform wireless communication with the at least one electronic device.

For example, the communication interface 13 may include a short-range communication module, for example, an IR communication module, capable of receiving a control command from a remote controller located in close proximity. In this case, the communication interface 13 may receive a control signal from the remote controller.

For example, the communication interface 13 may include at least one communication module performing communication according to the wireless communication standard, such as Bluetooth, Wi-Fi, BLE, NFC, RFID, Wi-Fi direct, UWB, or ZigBee. The communication interface 13 may further include a communication module performing communication with a server for supporting long-range communication according to the long-range communication standard. For example, the communication interface 13 may include a communication module performing communication through a network for Internet communication. Also, the communication interface 13 may include a communication module performing communication through a communication network according to the communication standard, such as 3G, 4G, 5G, and/or 6G.

In an embodiment of the disclosure, the processor 12 may individually or collectively execute the at least one instruction stored in the memory 11 to transmit, to an external device, the identification information corresponding to the application, stored in the short-range communication tag 10. In an embodiment of the disclosure, the processor 12 may individually or collectively execute the at least one instruction stored in the memory 11 to, when approach or contact with the first device 100 is identified, transmit the identification information corresponding to the application, stored in the short-range communication tag 10, to the first device 100.

In an embodiment of the disclosure, the processor 12 may individually or collectively execute the at least one instruction stored in the memory 11 to, when the approach or contact with the first device 100 is identified, store the identification information corresponding to the second device 200.

In an embodiment of the disclosure, the processor 12 may individually or collectively execute the at least one instruction stored in the memory 11 to transmit, to the third device 3000, the identification information corresponding to the application and the identification information corresponding to the second device 200. In an embodiment of the disclosure, the processor 12 may individually or collectively execute the at least one instruction stored in the memory 11 to, when approach or contact with the third device 3000 is identified, transmit, to the third device 3000, the identification information corresponding to the application and the identification information corresponding to the second device 200, stored in the short-range communication tag 10.

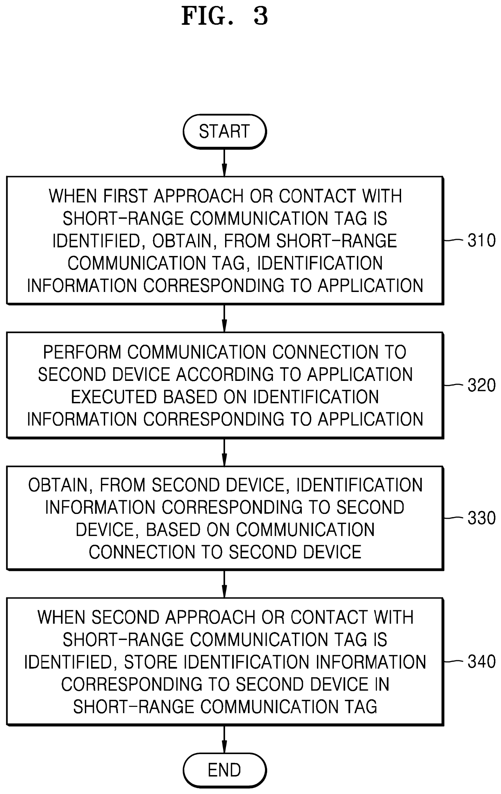

FIG. 3 is a flowchart of a method by which the first device 100 stores, in the short-range communication tag 10, the identification information corresponding to the second device 200, according to an embodiment of the disclosure.

In operation 310, the first device 100 may recognize the short-range communication tag 10. In an embodiment of the disclosure, the first device 100 may identify approach or contact with the short-range communication tag 10. For example, the first device 100 may detect approach to the short-range communication tag 10 in a non-contact manner as the first device 100 approaches the short-range communication tag 10. For example, the first device 100 may detect contact with the short-range communication tag 10 in a contact manner as the first device 100 comes into contact with the short-range communication tag 10.

For example, when the user brings the first device 100 close to or contacts the first device 100 to a place or device to which the short-range communication tag 10 is attached, the first device 100 may detect the approach or contact with the short-range communication tag 10. In an embodiment of the disclosure, the approach or contact may be replaced by tagging.

In an embodiment of the disclosure, the first device 100 may perform communication with the short-range communication tag 10 when the first device 100 approaches within a communication range of the short-range communication tag 10. For example, the first device 100 may perform NFC, RFID, or BLE communication with the short-range communication tag 10. In an embodiment of the disclosure, the first device 100 may transmit a data transmission request to the short-range communication tag 10. In an embodiment of the disclosure, the first device 100 may read (e.g., invoke or obtain) data from the short-range communication tag 10. In an embodiment of the disclosure, the short-range communication tag 10 may transmit data to the first device 100.

In an embodiment of the disclosure, the first device 100 may generate a detection signal when the approach or contact with the short-range communication tag 10 is detected. The first device 100 may recognize the approach or contact with the short-range communication tag 10 according to the detection signal.

In an embodiment of the disclosure, when the approach or contact with the short-range communication tag 10 is identified, the first device 100 may read (or obtain) the identification information corresponding to the application from the short-range communication tag 10. In an embodiment of the disclosure, the identification information corresponding to the application may include a web address (URL) connected to the application. The web address (URL) connected to the application may be represented in the form of a deep link, an application address, or an application store link, but is not limited thereto.

In an embodiment of the disclosure, the identification information corresponding to the application obtained by the first device 100 from the short-range communication tag 10 may be pre-stored in the short-range communication tag 10. For example, the identification information corresponding to the application may be stored in the short-range communication tag 10 during a process of manufacturing, distributing, or selling the short-range communication tag 10. For example, the identification information corresponding to the application read by the first device 100 from the short-range communication tag 10 may be stored in the short-range communication tag 10 by the user.

In an embodiment of the disclosure, the identification information corresponding to the application, stored in the short-range communication tag 10, may be identification information corresponding to an application for controlling the second device 200. In an embodiment of the disclosure, the identification information corresponding to the application, stored in the short-range communication tag 10, may be identification information corresponding to an application for controlling a function of the second device 200.

In an embodiment of the disclosure, the first device 100 may identify the application by obtaining the identification information corresponding to the application from the short-range communication tag 10. For example, the first device 100 may identify whether the application identified through a web address, an application address, or an application store link, which is connected to the application, is installed in the first device 100.

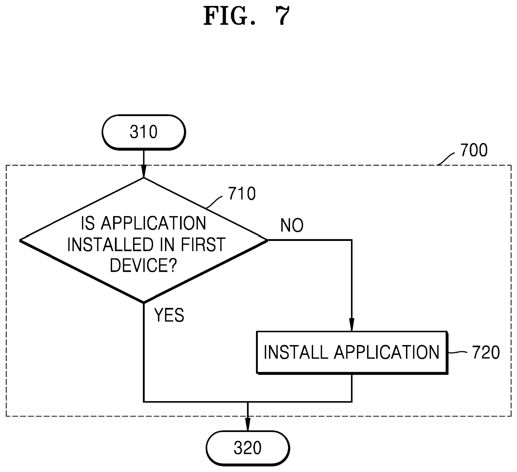

In an embodiment of the disclosure, the first device 100 may perform operations to be described below with reference to FIG. 7, depending on whether the application is installed in the first device 100.

FIG. 7 is a flowchart for describing detailed operations performed by the first device 100 depending on whether the application is installed in the first device 100, according to an embodiment of the disclosure.

In operation 710, the first device 100 may identify whether the application corresponding to the identification information corresponding to the application is installed in the first device 100.

In an embodiment of the disclosure, the first device 100 may check (search, identify, or recognize) the memory 110 of the first device 100. The first device 100 may search the memory 110 of the first device 100 to determine whether the application corresponding to the identification information (e.g., a URL, a uniform resource identifier (URI), or an application store link, or a package name) corresponding to the application, obtained from the short-range communication tag 10, is installed in the first device 100.

For example, when the identification information corresponding to the application is a URL address connected to a specific application, the first device 100 may search the memory 110 of the first device 100 for a package name of the specific application to identify whether the application is installed in the first device 100.

In operation 720, when the application according to the identification information corresponding to the application is not installed in the first device 100, the first device 100 may install the application.

In an embodiment of the disclosure, the first device 100 may automatically install the application according to the identification information corresponding to the application. In an embodiment of the disclosure, the first device 100 may download an application installation package by connecting to an application store or an application providing server, and perform an application installation process. In an embodiment of the disclosure, when automatically installing the application, the first device 100 may perform the installation in the background without requesting the user for separate confirmation. In an embodiment of the disclosure, the first device 100 may provide a notification to the user after the application has been installed.

In an embodiment of the disclosure, when the identification information corresponding to the application includes the application store link, the first device 100 may be redirected to the application store. In an embodiment of the disclosure, the first device 100 may execute an application store page for downloading the application corresponding to the identification information corresponding to the application. In an embodiment of the disclosure, the user may manually download and install the application from the application store executed in the first device 100.

In an embodiment of the disclosure, the first device 100 may output a guide screen recommending installation of the application. In an embodiment of the disclosure, the first device 100 may output a guide screen asking the user whether to install the application.

In an embodiment of the disclosure, the application may be installed in the first device 100 when the first device 100 performs the operations described above with reference to FIG. 7. The first device 100 may perform operations to be described below with reference to operation 320 of FIG. 3, according to the application of the first device 100.

Referring back to FIG. 3, in operation 320, the first device 100 may perform communication connection to the second device 200 through the application executed based on the identification information corresponding to the application.

In an embodiment of the disclosure, the first device 100 may execute the application identified based on the identification information corresponding to the application. When the identified application is installed in the first device 100 according to the operation of the first device 100 described with reference to FIG. 7, the first device 100 may execute the application. When the identified application is not installed in the first device 100, the first device 100 may install the application identified based on the identification information corresponding to the application, in the first device 100, and then execute the application.

In an embodiment of the disclosure, the first device 100 may perform the communication connection to the second device 200 by executing the application. In an embodiment of the disclosure, the communication connection may be performed through any one of various methods. For example, the communication connection may include communication according to the wireless communication standard, such as Bluetooth, Wi-Fi, BLE, NFC, RFID, Wi-Fi direct, UWB, or ZigBee, or communication according to the communication standard, such as Internet communication, 3G, 4G, 5G, and/or 6G. In the disclosure, only an example in which a BLE communication method is applied is described for convenience of description, but the disclosure is not limited thereto.

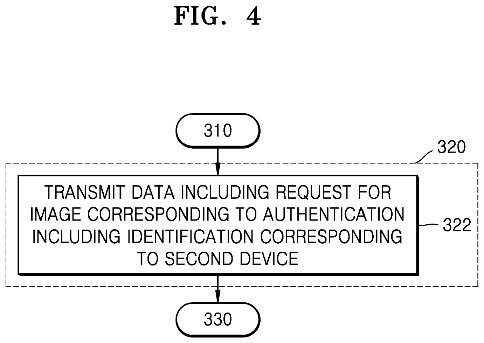

In an embodiment of the disclosure, the first device 100 may perform the communication connection to the second device 200 by transmitting a wireless communication signal. In an embodiment of the disclosure, the first device 100 may perform the communication connection to the second device 200 by receiving (e.g., obtaining) a wireless communication signal. An embodiment of the disclosure in which the first device 100 performs the communication connection to the second device 200 by transmitting the wireless communication signal will be described first with reference to FIGS. 4 to 9.

FIG. 4 is a flowchart for describing a detailed operation in which the first device 100 performs the communication connection to the second device 200 according to the application executed based on the identification information corresponding to the application, included in operation 320, according to an embodiment of the disclosure.

In operation 322, the first device 100 may perform the communication connection to the second device 200 by transmitting the wireless communication signal.

In an embodiment of the disclosure, the first device 100 may execute (or activate) the application. When the first device 100 executes (or activates) the application, a communication connection function of the first device 100 may be activated. For example, the first device 100 may perform the communication connection. For example, the first device 100 may start BLE communication.

In an embodiment of the disclosure, in order to obtain information from another electronic device, the first device 100 may generate an advertising packet including an information request. The advertising packet may be used by the first device 100 to notify a peripheral device of the existence of the first device 100 and transmit specific information. In an embodiment of the disclosure, the advertising packet transmitted by the first device 100 may include BLE MAC address, UUID, service data, or application execution request information of the first device 100. For example, the first device 100 may transmit, to a device that has requested the advertising packet, data (e.g., the advertising packet) including a request for an image corresponding to authentication including identification information corresponding to the device.

In an embodiment of the disclosure, the advertising packet may be configured according to a BLE data structure. For example, a BLE advertising packet may be indicated in the form of a protocol data unit (PDU) and include data (advertising data) having a size of total 31 bytes. The advertising packet may include service UUID, a request code, and additional metadata. The service UUID may be a value for identifying to which service a request transmitted by the first device 100 corresponds. The request code may be a code for identifying a type of a request transmitted by the first device 100 (e.g., a request for an image corresponding to authentication). The additional metadata may be data including a time, a location, or additional security information related to the request of the first device 100.

In an embodiment of the disclosure, the first device 100 may transmit the advertising packet, based on a wireless communication protocol. For example, the wireless communication protocol may be a BLE protocol, and the first device 100 may advertise or broadcast the advertising packet through a BLE advertising channel. The first device 100 may transmit the advertising packet at regular time intervals.

In an embodiment of the disclosure, the first device 100 may execute the application to advertise (or broadcast) the advertising packet including content requesting the image corresponding to the authentication including the identification information corresponding to the second device 200. The advertising packet transmitted by the first device 100 may include, in the request code, an image request code corresponding to authentication. The advertising packet transmitted by the first device 100 may be configured such that the peripheral device is able to identify the first device 100, by including UUID or a device name of the first device 100.

In an embodiment of the disclosure, the first device 100 may advertise the advertising packet and at the same time, execute an image scanner capable of obtaining the image corresponding to the authentication. For example, the first device 100 may advertise the BLE advertising packet and at the same time, execute a QR code scanner capable of obtaining a QR code.

In an embodiment of the disclosure, the identification information corresponding to the second device 200 may be information for identifying the second device 200. The identification information corresponding to the second device 200 may be used to distinguish a corresponding device during communication with the first device 100 or another device on a network. The identification information may be generated based on a network or physical characteristics of the second device 200, and represented in any form of data.

For example, the identification information corresponding to the second device 200 may include an MAC address of the second device 200. The MAC address may be a distinct identification value assigned to a network interface of the second device 200. The MAC address may be indicated differently according to wireless communication protocols (e.g., Wi-Fi, Bluetooth, BLE, and ZigBee). Accordingly, the identification information corresponding to the second device 200 may include at least one MAC address of the second device 200.

For example, the identification information corresponding to the second device 200 may include a shared key of the second device 200. The shared key may indicate an encryption key used for safe communication between the second device 200 and the first device 100. The shared key of the second device 200 may be pre-configured or generated through a key exchange protocol (e.g., Diffie-Hellman key exchange). The shared key may be indicated differently according to wireless communication protocols (e.g., Wi-Fi (WPA2/WPA3), Bluetooth, BLE, and ZigBee). Accordingly, the identification information corresponding to the second device 200 may include at least one shared key of the second device 200.

In an embodiment of the disclosure, the image corresponding to the authentication may indicate a key used to identify a specific device or determine authenticity of data by using information included in the image for security and authentication. For example, the image corresponding to the authentication may include a QR code, a barcode, or a digital watermark.

In an embodiment of the disclosure, upon receiving the signal including the content in which the first device 100 requests the image corresponding to the authentication including the identification information corresponding to the second device 200, the second device 200 may generate the image corresponding to the authentication including the identification information corresponding to the second device 200. The second device 200 may output the image corresponding to the authentication including the identification information corresponding to the second device 200.

For example, the second device 200 may generate the image corresponding to the authentication (e.g., a QR code) including at least one MAC address or the shared key of the second device 200. For example, the second device 200 may generate the image corresponding to the authentication (e.g., a QR code) by encoding the at least one MAC address or the shared key of the second device 200.

In an embodiment of the disclosure, the second device 200 may output the image corresponding to the authentication through the second device 200. In an embodiment of the disclosure, the second device 200 may output the image corresponding to the authentication through another electronic device.

Referring back to FIG. 3, in operation 330, the first device 100 may obtain the identification information corresponding to the second device 200 from the second device 200, based on the communication connection to the second device 200.

In an embodiment of the disclosure, the first device 100 may obtain, from the second device 200, the identification information corresponding to the second device 200, based on the wireless communication with the second device 200, performed by transmitting the wireless communication signal. In an embodiment of the disclosure, the first device 100 may obtain, from the second device 200, the identification information corresponding to the second device 200, based on the communication connection to the second device 200, performed by receiving (e.g., obtaining) the wireless communication signal.

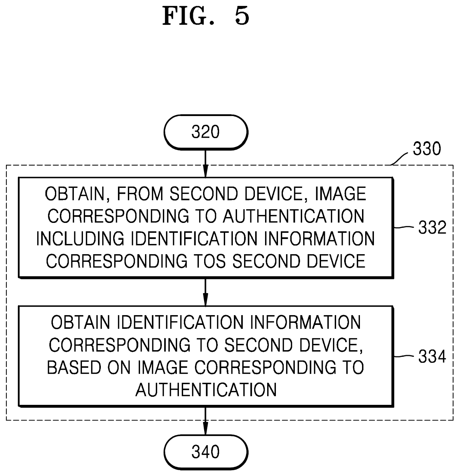

First, an embodiment of the disclosure in which the first device 100 obtains the identification information corresponding to the second device 200 from the second device 200, based on the communication connection to the second device 200, performed by transmitting the wireless communication signal, will be described with reference to FIG. 5.

FIG. 5 is a flowchart for describing detailed operations in which the first device 100 obtains, from the second device 200, the identification information corresponding to the second device 200, based on the communication connection between the first device 100 and the second device 200, included in operation 330, according to an embodiment of the disclosure.

In operation 332, the first device 100 may obtain, from the second device 200, the image corresponding to the authentication including the identification information corresponding to the second device 200.

In an embodiment of the disclosure, the first device 100 may include a camera.

A camera module of the first device 100 may be activated. For example, the camera module of the first device 100 may be activated according to the user's operation. For example, the camera module of the first device 100 may be activated by an application. The application may be the application described above with reference to FIGS. 3 and 7, or any application installed in the first device 100. For example, the camera module may be activated in the first device 100 by the QR code scanner. For example, the camera module of the first device 100 may be activated by system software.

In an embodiment of the disclosure, when the camera module of the first device 100 is activated by the application or the system software, the application or the system software may output a guide for obtaining the image corresponding to the authentication including the identification information corresponding to the second device 200. For example, a user interface of the first device 100 may output a message such as "Please scan the image displayed on the screen of the second device with the camera".

The first device 100 may obtain the image corresponding to the authentication including the identification information corresponding to the second device 200 by photographing the second device 200 through the camera. The first device 100 may obtain the image corresponding to the authentication including the identification information corresponding to the second device 200 by capturing (or scanning), through the camera, the image corresponding to the authentication output to the second device 200. For example, the first device 100 may scan a QR code including the identification information corresponding to the second device 200 output on a display of the second device 200.

In an embodiment of the disclosure, the first device 100 may extract, from the captured image, an area of the image corresponding to the authentication. For example, the first device 100 may extract (or analyze) the area of the image corresponding to the authentication, based on a pattern (e.g., a corner pattern) of the QR code included in the captured image.

In operation 334, the first device 100 may obtain the identification information corresponding to the second device 200, based on the image corresponding to the authentication.

In an embodiment of the disclosure, the first device 100 may store the identification information corresponding to the second device 200 obtained based on the image corresponding to the authentication. For example, the first device 100 may store the identification information corresponding to the second device 200 in internal memory or a variable of the first device 100. In an embodiment of the disclosure, the first device 100 may write, on a system log, information indicating that the identification information corresponding to the second device 200 has been stored. In an embodiment of the disclosure, the first device 100 may provide, to the user, a message indicating that the identification information corresponding to the second device 200 has been stored. For example, the first device 100 may provide, to the user, a message such as "the image corresponding to the authentication of the second device 200 has been successfully scanned".

In an embodiment of the disclosure, the first device 100 may interpret data included in the image corresponding to the authentication, according to a protocol.

In an embodiment of the disclosure, the first device 100 may obtain (or extract) at least one of the MAC address or the shared key of the second device 200 from the scanned image corresponding to the authentication. In an embodiment of the disclosure, the first device 100 may obtain (or extract) at least one of the MAC address or the shared key of the second device 200 from the scanned image corresponding to the authentication by using the identification information corresponding to the second device 200.

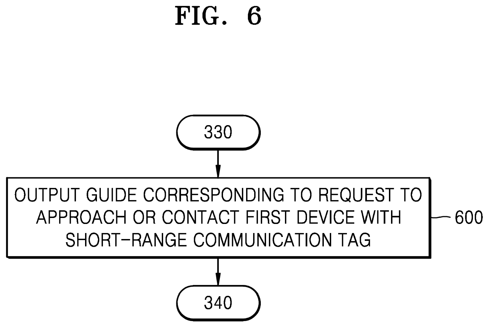

In an embodiment of the disclosure, the first device 100 may perform operations to be described below with reference to FIG. 6, after obtaining the identification information corresponding to the second device 200.

FIG. 6 is a flowchart for describing an operation in which the first device 100 outputs a guide corresponding to a request to approach or contact the first device 100 with the short-range communication tag 10, according to an embodiment of the disclosure.

In operation 600, the first device 100 may output the guide corresponding to the request to approach or contact the first device 100 with the short-range communication tag 10. In an embodiment of the disclosure, based on obtaining the identification information corresponding to the second device 200, the first device 100 may output the guide corresponding to the request to approach or contact the first device 100 with the short-range communication tag 10.

In an embodiment of the disclosure, when the first device 100 obtains the identification information corresponding to the second device 200, the application executed by the first device 100 may output the guide corresponding to the request to approach or contact (or tag) the first device 100 with the short-range communication tag 10. For example, based on the obtained identification information corresponding to the second device 200, the first device 100 may output the guide corresponding to the request to approach or contact the short-range communication tag 10, based on the identification information corresponding to the second device 200 in the application.

For example, the first device 100 may output, through the application, a guide such as "Please contact the first device with the NFC tag". Through the guide, the first device 100 may instruct the user to approach or contact the short-range communication tag 10.

In an embodiment of the disclosure, the first device 100 may output the guide through an output interface (e.g., a display or a speaker) of the first device 100. In an embodiment of the disclosure, the first device 100 may output the guide through an output interface (e.g., a display or a speaker) of another electronic device.

In an embodiment of the disclosure, based on the first device 100 outputting the guide corresponding to the request to approach or contact (or tag) the short-range communication tag 10, the communication interface 130 of the first device 100 may be activated. For example, the first device 100 may prepare to communicate with the short-range communication tag 10. For example, the first device 100 may communicate with the short-range communication tag 10 through the communication interface 130. The first device 100 may perform operation 340 after performing operation 600 described above with reference to FIG. 6.

Referring back to FIG. 3, in operation 340, the first device 100 may store, in the short-range communication tag 10, the identification information corresponding to the second device 200. For example, when the approach or contact with the short-range communication tag 10 is identified, the first device 100 may store the identification information corresponding to the second device 200 in the short-range communication tag 10.

In an embodiment of the disclosure, the first device 100 may store (or write) the identification information corresponding to the second device 200 in the short-range communication tag 10, through an NFC reader or an RFID write device. For example, when the approach or contact with the short-range communication tag 10 is identified, the first device 100 may execute the NFC reader or the RFID write device.

For example, when the approach or contact with the short-range communication tag 10 is identified, the first device 100 may record (or program) the data including the identification information corresponding to the second device 200 in the short-range communication tag 10. In an embodiment of the disclosure, after recording the data including the identification information corresponding to the second device 200 in the short-range communication tag 10, the first device 100 may determine whether storage has been successfully performed by reading tag content again.

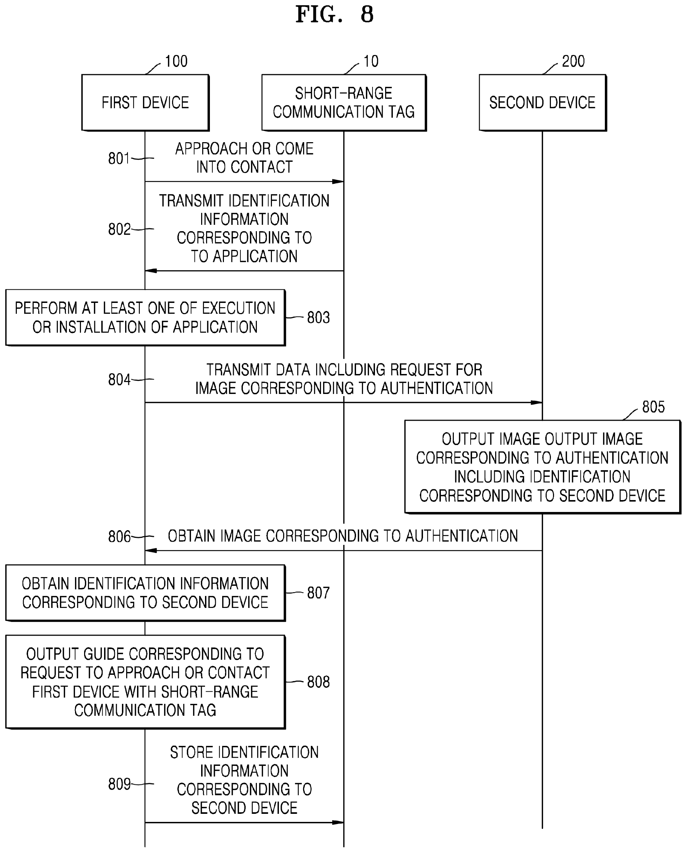

FIG. 8 is a flowchart for describing an operating method between the first device 100, the short-range communication tag 10, and the second device 200, according to an embodiment of the disclosure.

Operations included in the flowchart of FIG. 8 may be performed by at least one of the first device 100, the second device 200, or the short-range communication tag 10 of FIGS. 1 to 7. The operations included in the flowchart of FIG. 8 may be included in respective operations of FIGS. 3 to 7. Details described above with reference to FIGS. 1 to 7 may be identically applied to FIG. 8 even if omitted below.

Referring to FIG. 8, in operation 801, the first device 100 may identify approach or contact with the short-range communication tag 10. When the first device 100 enters an identifiable range of the short-range communication tag 10, the first device 100 may identify the short-range communication tag 10. When the short-range communication tag 10 enters an identifiable range of the first device 100, the short-range communication tag 10 may identify the first device 100.

In operation 802, the first device 100 may read the short-range communication tag 10. The first device 100 may obtain the identification information corresponding to the application by reading the short-range communication tag 10. The short-range communication tag 10 may transmit the identification information corresponding to the application to the first device 100. For example, the short-range communication tag 10 may transmit an application address. The application identified by the identification information corresponding to the application may be an application for controlling the second device 200.

In operation 803, the first device 100 may perform at least one of installation or execution of the application. For example, the first device 100 may identify the application by using the application address read from the short-range communication tag 10. The first device 100 may identify whether the application is installed in the first device 100. When the application is not installed in the first device 100, the first device 100 may install the application. The first device 100 may execute the installed application. When the application is installed in the first device 100, the first device 100 may immediately execute the application.

In operation 804, the first device 100 may transmit data to peripheral devices. For example, the first device 100 may advertise a wireless communication signal to the surroundings. The first device 100 may transmit the data to the peripheral devices by executing the application. For example, the first device 100 may transmit, to an electronic device that has received data, data including content requesting an image corresponding to authentication including identification information corresponding to the electronic device. A wireless communication signal transmitted by the first device 100 may be in the form of a BLE advertising packet. The second device 200 may obtain (or receive) the wireless communication signal transmitted by the first device 100.

In operation 805, the second device 200 may output the image corresponding to the authentication including the identification information corresponding to the second device 200. The second device 200 may output the image corresponding to the authentication including the identification information corresponding to the second device 200, based on the wireless communication signal advertised by the first device 100. For example, the second device 200 may output, to a screen of the second device 200, a QR code including identification information corresponding to at least one of the MAC address or the shared key of the second device 200.

In operation 806, the first device 100 may obtain the image corresponding to the authentication output by the second device 200. For example, the first device 100 may scan, by using a camera, the QR code including the identification information corresponding to the second device 200 output on the screen of the second device 200.

In operation 807, the first device 100 may obtain (or extract) the identification information corresponding to the second device 200 from the scanned image corresponding to the authentication.

In operation 808, the first device 100 may output the guide corresponding to the request to approach or contact the first device 100 with the short-range communication tag 10. For example, based on obtaining the image corresponding to the authentication, the first device 100 may output the guide corresponding to the request to approach or contact the first device 100 with the short-range communication tag 10. For example, the first device 100 may output the guide corresponding to the request to approach or contact the first device 100 with the short-range communication tag 10, based on the application.

In operation 809, the first device 100 may store the identification information corresponding to the second device 200 in the short-range communication tag 10. For example, the short-range communication tag 10 may store the identification information corresponding to the second device 200.

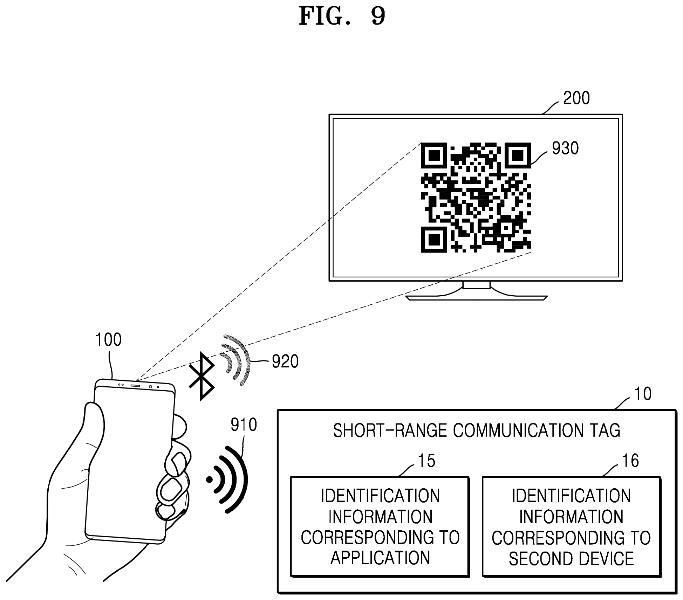

FIG. 9 is a reference diagram for describing an operating method between the first device 100, the short-range communication tag 10, and the second device 200, according to an embodiment of the disclosure.

In an embodiment of the disclosure, the first device 100 may tag the short-range communication tag 10. In an embodiment of the disclosure, when approach or contact with the short-range communication tag 10 is identified, the first device 100 may obtain the identification information 15. The first device 100 and the short-range communication tag 10 may communicate with each other by being connected to each other through short-range wireless communication 910.

In an embodiment of the disclosure, the first device 100 may identify the application based on the identification information 15. The first device 100 may perform at least one of installation of the application, execution of the installed application, or execution of the application that is already installed. The first device 100 may transmit data by executing the application. The first device 100 may broadcast a wireless communication signal by executing the application. For example, the first device 100 may transmit a BLE advertising packet through advertisement 920 by executing the application.

In an embodiment of the disclosure, the second device 200 may receive the data transmitted by the first device 100. The second device 200 may output an image 930 corresponding to authentication including the identification information corresponding to the second device 200, based on the data transmitted by the first device 100.

In an embodiment of the disclosure, the first device 100 may obtain (or scan) the image 930 corresponding to authentication including the identification information corresponding to the second device 200. The first device 100 may obtain the identification information corresponding to the second device 200 by obtaining (or scanning) the image 930 corresponding to authentication.

The first device 100 may tag the short-range communication tag 10. In an embodiment of the disclosure, based on identifying the approach or contact with the short-range communication tag 10, the first device 100 may store the identification information 16 in the short-range communication tag 10. The first device 100 and the short-range communication tag 10 may communicate with each other by being connected to each other through the short-range wireless communication 910.

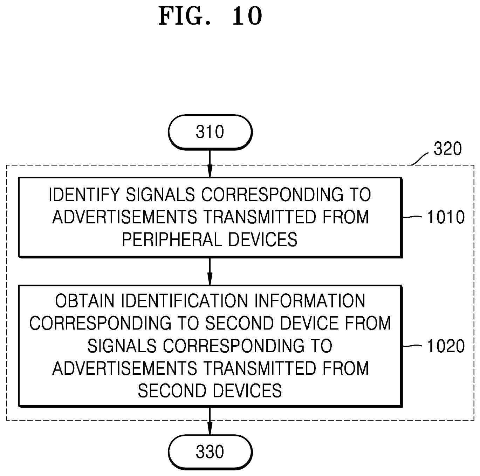

Hereinafter, an embodiment of the disclosure in which the first device 100 performs communication connection to the second device 200 will be described first with reference to FIGS. 10 to 13. Operations included in flowcharts of FIGS. 10 to 12 may be performed by at least one of the first device 100, the second device 200, or the short-range communication tag 10 of FIGS. 1 to 7. Details described with reference to FIGS. 1 to 9 may be included in respective operations of FIGS. 10 to 13. Details described above with reference to FIGS. 1 to 9 may be identically applied to FIGS. 10 to 13 even if omitted below.

FIG. 10 is a flowchart for describing a detailed operation in which the first device 100 performs the communication connection to the second device 200 according to the application executed according to the identification information corresponding to the application, included in operation 320, according to an embodiment of the disclosure.

In operation 1010, the first device 100 may identify the signals corresponding to the advertisements, transmitted from the peripheral devices.

In an embodiment of the disclosure, the first device 100 may execute (or activate) the application. When the first device 100 executes (or activates) the application, a wireless communication function of the first device 100 may be activated. For example, the first device 100 may perform wireless communication. For example, the first device 100 may start BLE communication.

In an embodiment of the disclosure, the first device 100 may start a BLE scan. The first device 100 may activate a BLE module to start the BLE scan.

The first device 100 may identify advertising packets (e.g. BLE advertising packet)of the peripheral devices, corresponding to the advertisements, by executing a BLE scan command. The advertising packet includes advertising data, and information of the peripheral device may be transmitted through the advertising packet. For example, the first device 100 may scan a BLE signal by setting a scan interval, a scan window, and a scan mode (whether to receive both an advertising packet and response data or receive only the advertising packet).

In operation 1020, the first device 100 may obtain the signals corresponding to the advertisements, transmitted from the peripheral devices. For example, the first device 100 may receive the advertising packet transmitted from the peripheral device. The first device 100 may obtain (or extract) information and data of the peripheral device from the received advertising packet. The advertising packet transmitted by the peripheral device may include identification information of the peripheral device. For example, the advertising packet may include at least one of a device name, an MAC address, or a service UUID of the peripheral device. The first device 100 may extract the identification information of the peripheral device from the advertising packet. The peripheral device may transmit the advertising packet at regular time intervals.

In an embodiment of the disclosure, the first device 100 may obtain the signal corresponding to the advertisement, transmitted from the second device 200. In an embodiment of the disclosure, a signal corresponding to an advertisement, transmitted from the second device 200, may indicate an advertising packet including the identification information corresponding to the second device 200. For example, the first device 100 may obtain, from the signal corresponding to the advertisement transmitted from the second device 200, at least one of a device name, an MAC address, or a service UUID of the second device 200. The advertising packet may include various fields. The first device 100 may extract the identification information corresponding to the second device 200 from the advertising packet.

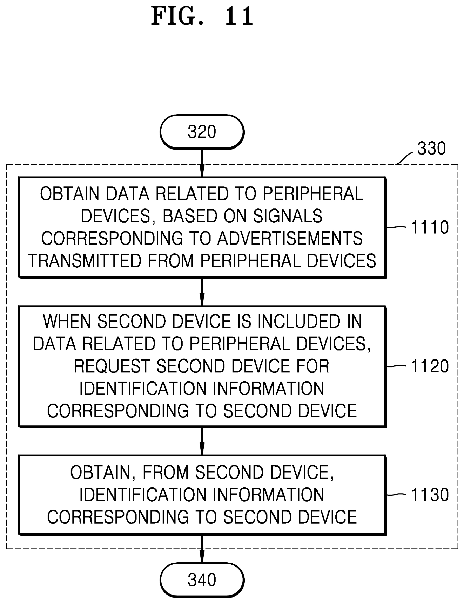

FIG. 11 is a flowchart for describing detailed operations in which the first device 100 obtains, from the second device 200, the identification information corresponding to the second device 200, based on the communication connection between the first device 100 and the second device 200, included in operation 330, according to an embodiment of the disclosure.

In operation 1110, the first device 100 may obtain the data related to the peripheral devices, based on the signals corresponding to the advertisements, transmitted from the peripheral devices. For example, the first device 100 may identify each peripheral device by extracting the identification information of the peripheral devices from the signals corresponding to the advertisements, transmitted from the peripheral devices. The first device 100 may generate a list of peripheral devices, based on the identified peripheral devices. The first device 100 may receive the signals corresponding to the advertisements, transmitted from the peripheral devices, and obtain the data related to the peripheral devices, based on the application. For example, the first device 100 may obtain the list of peripheral devices.

The first device 100 may store, in the memory 110, the data related to the peripheral devices. The first device 100 may output the data related to the peripheral devices. For example, the first device 100 may output the data related to the peripheral devices (e.g., the list of peripheral devices) through at least one of a display or a speaker of the first device 100.

The data related to the peripheral devices (e.g., the list of peripheral devices) may indicate data related to a device of a same type as the second device 200 (e.g., a list of devices of a same type). For example, when the second device 200 is a TV, the data related to the peripheral devices may indicate data related to nearby TVs. The data related to the peripheral devices may indicate a list of devices of a same type as or a different type from the second device 200. For example, when the second device 200 is a TV, the data related to the peripheral devices may indicate a list of all nearby electronic devices, such as a TV, a monitor, a mobile phone, a tablet computer, and a speaker.

In operation 1120, the first device 100 may identify the second device 200 from the data related to the peripheral devices.

In an embodiment of the disclosure, the first device 100 may identify the second device 200 from the data related to the peripheral devices (e.g., the list of peripheral devices). The first device 100 may obtain a user input of selecting the second device 200 from the list of peripheral devices. The first device 100 may identify the second device 200 from the data related to the peripheral devices, based on a signal of selecting the second device 200.

In an embodiment of the disclosure, the first device 100 may request the second device 200 for the identification information corresponding to the second device 200. For example, based on the second device 200 being identified from the data related to the peripheral devices, the first device 100 may request the second device 200 for the identification information corresponding to the second device 200.

In operation 1130, the first device 100 may obtain the identification information corresponding to the second device 200. For example, the first device 100 may obtain (or receive) the identification information corresponding to the second device 200 from the second device 200, based on communication according to the wireless communication standard, such as Bluetooth, Wi-Fi, BLE, NFC, RFID, Wi-Fi direct, UWB, or ZigBee, or communication according to the communication standard, such as Internet communication, 3G, 4G, 5G, and/or 6G. The identification information corresponding to the second device 200 may include at least one MAC address and at least one shared key of the second device 200. Redundant descriptions about distinct identification information are omitted here for brevity.

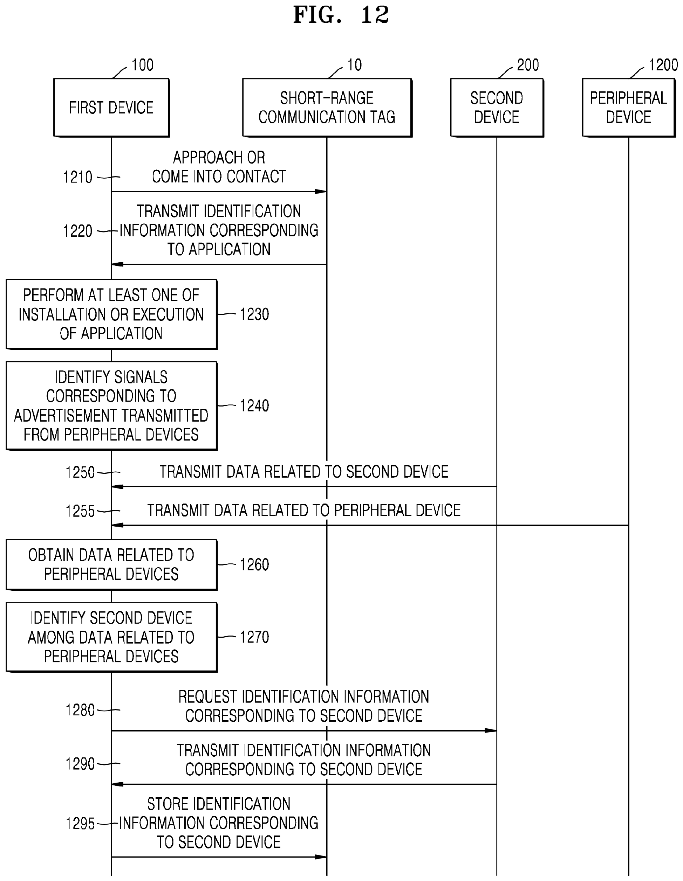

FIG. 12 is a flowchart for describing an operating method between the first device 100, the short-range communication tag 10, the second device 200, and a peripheral device 1200, according to an embodiment of the disclosure.

Operations performed by the first device 100 and the short-range communication tag 10 in operations 1210 to 1230 may correspond to operations 801 to 803 described above with reference to FIG. 8. Accordingly, redundant descriptions are omitted herein for brevity.

In operation 1240, the first device 100 may identify the signals corresponding to the advertisements, transmitted from peripheral devices. For example, the first device 100 may search for BLE advertising packets broadcasted by the peripheral devices. For example, the first device 100 may identify the BLE advertising packets broadcasted by the peripheral devices by executing the application.

In operation 1250, the first device 100 may transmit, to the first device 100, the data related to the second device 200. The first device 100 may identify the signal corresponding to the advertisement, transmitted from the second device 200. The signal corresponding to the advertisement, transmitted by the second device 200, may include the identification information corresponding to the second device 200. The signal advertised by the second device 200 may be a BLE advertising packet. The first device 100 may extract the identification information corresponding to the second device 200 from the signal corresponding to the advertisement, transmitted by the second device 200. The second device 200 may transmit a signal including the identification information corresponding to the second device 200.

In operation 1255, the peripheral device 1200 may transmit data related to the peripheral device 1200. The first device 100 may obtain the signal corresponding to the advertisement, transmitted from the peripheral device 1200. The signal corresponding to the advertisement, transmitted from the peripheral device 1200, may include identification information corresponding to the peripheral device 1200. The signal corresponding to the advertisement, transmitted from the peripheral device 1200, may be a BLE advertising packet. The peripheral devices may include the peripheral device 1200 and the second device 200. The first device 100 may extract the identification information corresponding to the peripheral device 1200 from the signal corresponding to the advertisement, transmitted from the peripheral device 1200. The peripheral device 1200 may transmit a signal including the identification information corresponding to the peripheral device 1200.

In operation 1260, the first device 100 may obtain the data related to the peripheral devices. The first device 100 may obtain the data related to the peripheral devices, based on at least one of the identification information corresponding to the peripheral device 1200 or the identification information corresponding to the second device 200. The first device 100 may output the data related to the peripheral devices (e.g., a list of peripheral devices).

In operation 1270, the first device 100 may identify the second device 200 from the data related to the peripheral devices. For example, the first device 100 may identify whether the data related to the peripheral devices includes the second device 200. For example, the first device 100 may identify the second device 200 by obtaining a user input of identifying the second device 200 from the data related to the peripheral devices.

In operation 1280, the first device 100 may request the second device 200 for the identification information corresponding to the second device 200. The first device 100 may request the second device 200 for the identification information corresponding to the second device 200 by executing the application. The second device 200 may obtain (e.g., receive) a request of the first device 100 for the identification information corresponding to the second device 200. In an embodiment of the disclosure, when the second device 200 is included in the data related to the peripheral devices, the first device 100 may request the second device 200 for the identification information corresponding to the second device 200.

In operation 1290, the first device 100 may obtain, from the second device 200, the identification information corresponding to the second device 200. The second device 200 may transmit the identification information corresponding to the second device 200 to the first device 100.

In operation 1295, the first device 100 may store the identification information corresponding to the second device 200 in the short-range communication tag 10. For example, the short-range communication tag 10 may store the identification information corresponding to the second device 200.

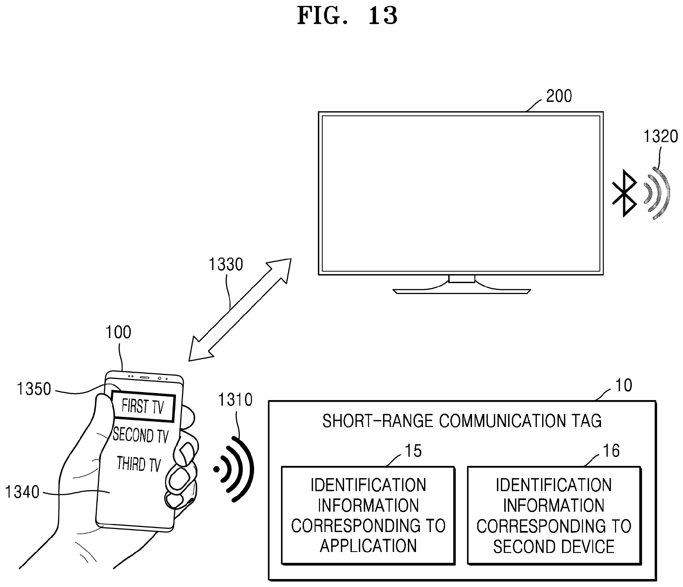

FIG. 13 is a reference diagram for describing an operating method between the first device 100, the short-range communication tag 10, the second device 200, and a peripheral device, according to an embodiment of the disclosure.

In an embodiment of the disclosure, the first device 100 may tag the short-range communication tag 10. In an embodiment of the disclosure, when approach or contact with the short-range communication tag 10 is identified, the first device 100 may obtain the identification information 15. The first device 100 and the short-range communication tag 10 may perform communication connection by being connected to each other through short-range wireless communication 1310.

In an embodiment of the disclosure, the first device 100 may identify the application based on the identification information 15. The first device 100 may perform at least one of installation of the application, execution of the installed application, or execution of the application that is already installed.

The first device 100 may scan a wireless communication signal by executing the application. For example, the first device 100 may identify BLE advertising packets broadcasted by peripheral devices by executing the application. For example, the first device 100 may identify a BLE advertising packet 1320 broadcasted by the second device 200 by executing the application.

In an embodiment of the disclosure, the first device 100 may obtain data 1340 related to peripheral devices, based on the scanned wireless communication signal. The first device 100 may identify each device by extracting, from the scanned wireless communication signal, identification information of the peripheral devices including the second device 200. The first device 100 may obtain the data 1340 related to the peripheral devices, based on the identification information of the peripheral devices including the second device 200.

In an embodiment of the disclosure, the first device 100 may display the data 1340 related to the peripheral devices including a first TV, a second TV, and a third TV, and receive an input 1350 of selecting the first TV indicating the second device 200 from the data 1340. The first device 100 may perform communication 1330 with the second device 200, based on the input 1350 of selecting the second device 200. For example, the first device 100 may request the identification information 16. The second device 200 may transmit the identification information 16. The first device 100 may obtain the identification information 16.

The first device 100 may tag the short-range communication tag 10. In an embodiment of the disclosure, based on identifying the approach or contact with the short-range communication tag 10, the first device 100 may store the identification information 16 in the short-range communication tag 10. The first device 100 and the short-range communication tag 10 may communicate with each other by being connected to each other through the short-range wireless communication 1310.

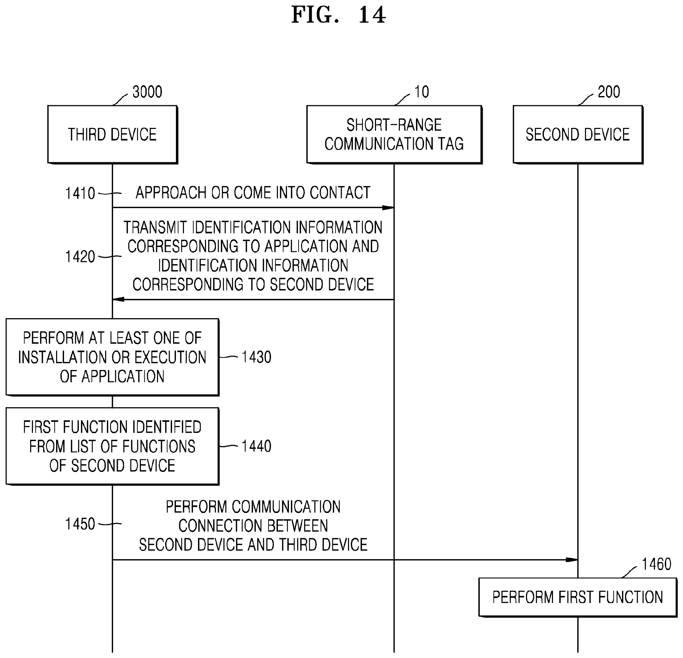

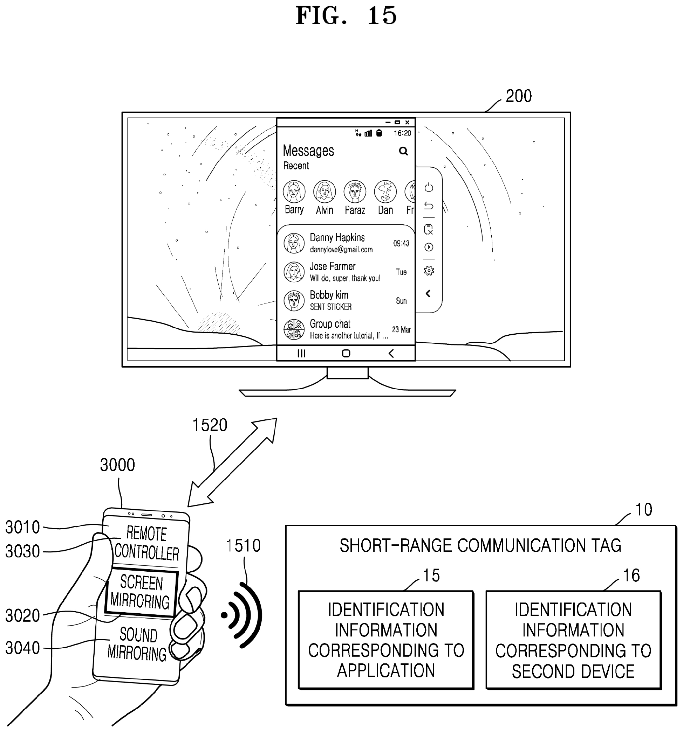

Hereinafter, an embodiment of the disclosure in which the third device 3000 controls the second device 200 by being connected to the second device 200, based on the short-range communication tag 10, will be described with reference to FIGS. 14 and 15. In the embodiment of the disclosure to be described below, the third device 3000 may be any electronic device. In other words, the third device 3000 may be the first device 100 or another electronic device. In the embodiment of the disclosure to be described below, the short-range communication tag 10 may have recorded thereon the identification information corresponding to the second device 200, according to the operations described above with reference to FIGS. 1 to 13.

FIG. 14 is a flowchart for describing an operating method between the second device 200, the short-range communication tag 10, and the third device 3000, according to an embodiment of the disclosure.

In operation 1410, the third device 3000 may identify approach or contact with the short-range communication tag 10. When the third device 3000 enters an identifiable range of the short-range communication tag 10, the third device 3000 may identify the short-range communication tag 10. When the short-range communication tag 10 enters an identifiable range of the third device 3000, the short-range communication tag 10 may identify the third device 3000.

In operation 1420, the third device 3000 may read the short-range communication tag 10. The third device 3000 may read the short-range communication tag 10 to obtain the identification information corresponding to the application and the identification information corresponding to the second device 200.

The short-range communication tag 10 may transmit, to the third device 3000, the identification information corresponding to the application and the identification information corresponding to the second device 200. For example, the short-range communication tag 10 may transmit an application address. The application identified by the identification information corresponding to the application may be an application for controlling the second device 200. For example, the short-range communication tag 10 may transmit the identification information corresponding to the second device 200. The identification information corresponding to the second device 200 may include at least one MAC address of the second device 200. The identification information corresponding to the second device 200 may include at least one shared key of the second device 200.

In operation 1430, the third device 3000 may perform at least one of installation or execution of the application. For example, the third device 3000 may identify the application by using the identification information corresponding to the application, read from the short-range communication tag 10. The third device 3000 may identify whether the application is installed in the third device 3000. When the application is not installed in the third device 3000, the third device 3000 may install the application. The third device 3000 may execute the installed application. When the application is installed in the third device 3000, the third device 3000 may immediately execute the application.

In operation 1440, the third device 3000 may output a list of functions of the second device 200. The third device 3000 may execute the application, based on the obtained identification information corresponding to the application. The third device 3000 may output the list of functions of the second device 200 by executing the application.

In an embodiment of the disclosure, the third device 3000 may control the second device 200 by executing the application. The list of functions of the second device 200 may include a list of functions for controlling the second device 200 by using the third device 3000. For example, the list of functions of the second device 200 may include remote controller, screen mirroring, or sound mirroring.

In an embodiment of the disclosure, the third device 3000 may identify a first function from the list of functions of the second device 200. For example, the third device 3000 may obtain a user input of selecting the first function from the list of functions of the second device 200. For example, the third device 3000 may identify the first function from the list of functions of the second device 200, by the application executed on the third device 3000.

In operation 1450, the third device 3000 may perform communication connection to the second device 200. In an embodiment of the disclosure, the third device 3000 may be connected to the second device 200, based on the first function being identified (or selected) from the list of functions of the second device 200. Based on the first function being identified (or selected) from the list of functions of the second device 200, the third device 3000 may recognize that the user is to control the second device 200 by using the third device 3000.

In an embodiment of the disclosure, the third device 3000 may perform the communication connection to the second device 200, based on the identification information corresponding to the second device 200, obtained from the short-range communication tag 10. For example, the third device 3000 may perform the communication connection to the second device 200, based on the MAC address and the shared key of the second device 200, obtained from the short-range communication tag 10. For example, the third device 3000 may perform the communication connection to the second device 200, based on communication according to the wireless communication standard, such as Bluetooth, Wi-Fi, BLE, Wi-Fi direct, UWB, or ZigBee, or communication according to the communication standard, such as Internet communication, 3G, 4G, 5G, and/or 6G.

In operation 1460, the second device 200 may perform the first function. The second device 200 may perform the communication connection to the third device 3000 and perform the first function selected by the third device 3000. The second device 200 may identify that the first function has been selected by the third device 3000, through the wireless communication to the third device 3000.

The second device 200 may perform the first function based on the first function being identified from the list of functions of the second device 200, output to the third device 3000. When the selection of the first function from the list of functions of the second device 200, output to the third device 3000, is canceled, the second device 200 may stop performing the first function. When a plurality of functions including the first function are selected from the list of functions of the second device 200, output to the third device 3000, the second device 200 may perform the plurality of functions.

FIG. 15 is a reference diagram for describing an operating method between the second device 200, the short-range communication tag 10, and the third device 3000, according to an embodiment of the disclosure.

In an embodiment of the disclosure, the third device 3000 may tag the short-range communication tag 10. In an embodiment of the disclosure, when approach or contact with the short-range communication tag 10 is identified, the third device 3000 may obtain the identification information 15 and the identification information 15. The third device 3000 and the short-range communication tag 10 may communicate with each other by being connected to each other through short-range wireless communication 1510.

In an embodiment of the disclosure, the third device 3000 may identify the application based on the identification information 15. The third device 3000 may perform at least one of installation of the application, execution of the installed application, or execution of the application that is already installed. The third device 3000 may output a list 3010 of functions related to the second device 200, by executing the application. The list 3010 of functions related to the second device 200 may include a remote controller 3030, screen mirroring 3020, and sound mirroring 3040.

In an embodiment of the disclosure, the third device 3000 may obtain a user input of selecting the first function from the list 3010 of functions related to the second device 200. In an embodiment of the disclosure, the third device 3000 may perform communication connection 1520 to the second device 200, based on the first function being selected from the list 3010 of functions of the second device 200. The third device 3000 may perform the communication connection 1520 to the second device 200, based on the identification information 16 obtained from the short-range communication tag 10.

In an embodiment of the disclosure, the second device 200 may perform the first function, based on the first function being selected from the list 3010 of functions related to the second device 200. For example, when the screen mirroring 3020 is selected from the list 3010 of functions of the second device 200, the second device 200 may mirror a screen of the third device 3000. For example, when a messenger screen was being displayed on the third device 3000 before the list 3010 of functions is output, the messenger screen of the third device 3000 may be output on the second device 200.

For example, when the sound mirroring 3040 is selected from the list 3010 of functions of the second device 200, the second device 200 may mirror sound of the third device 3000. For example, audio or sound of a moving image being reproduced in the third device 3000 may be output through the second device 200.

For example, when the remote controller 3030 is selected from the list 3010 of functions of the second device 200, the third device 3000 may control (or operate) the second device 200. For example, the third device 3000 may select a menu or a function of the second device 200. For example, the third device 3000 may turn off or turn on the second device 200, or may change at least one of a channel or volume of the second device 200.

An operating method of an electronic device, according to an embodiment of the disclosure, may include, when approach or contact with a short-range communication tag is identified, obtaining identification information corresponding to an application from the short-range communication tag. The operating method may include performing a communication connection to a second device according to the application executed based on the identification information corresponding to the application. The operating method may include obtaining, from the second device, identification information corresponding to the second device, based on the communication connection to the second device. The operating method may include, when approach or contact with the short-range communication tag is identified, storing, in the short-range communication tag, the identification information corresponding to the second device.

In an embodiment of the disclosure, the performing of the communication connection to the second device according to the application executed based on the identification information corresponding to the application may include transmitting data including a request for an image corresponding to authentication including the identification information corresponding to the second device by executing the application.

In an embodiment of the disclosure, the obtaining of, from the second device, the identification information corresponding to the second device, based on the communication connection to the second device may include obtaining, from the second device, the image corresponding to the authentication including the identification information corresponding to the second device. The obtaining of, from the second device, the identification information corresponding to the second device, based on the communication connection to the second device may include obtaining the identification information corresponding to the second device, based on the image corresponding to the authentication.

In an embodiment of the disclosure, the operating method may further include, when the identification information corresponding to the second device is obtained, outputting a guide corresponding to a request to approach or contact the first device with the short-range communication tag.

In an embodiment of the disclosure, the operating method may further include, when the application according to the identification information corresponding to the application is not installed in the first device, installing the application.

In an embodiment of the disclosure, the identification information corresponding to the second device may include at least one of an MAC address of the second device or a shared key of the second device.

In an embodiment of the disclosure, the performing of the communication connection to the second device according to the application executed based on the identification information corresponding to the application may include identifying signals corresponding to advertisements transmitted from peripheral devices by executing the application. In an embodiment of the disclosure, the performing of the communication connection to the second device according to the application executed based on the identification information corresponding to the application may include obtaining the identification information corresponding to the second device from a signal corresponding to an advertisement transmitted from the second device among the signals corresponding to the advertisements transmitted from the peripheral devices.

In an embodiment of the disclosure, the obtaining of, from the second device, the identification information corresponding to the second device, based on the communication connection to the second device may include obtaining data related to the peripheral devices, based on the signals corresponding to the advertisements transmitted from the peripheral devices. In an embodiment of the disclosure, the obtaining of, from the second device, the identification information corresponding to the second device, based on the communication connection to the second device may include, when the second device is included in the data related to the peripheral devices, requesting the second device for the identification information corresponding to the second device. In an embodiment of the disclosure, the obtaining of, from the second device, the identification information corresponding to the second device, based on the communication connection to the second device may include obtaining, from the second device, the identification information corresponding to the second device.

In an embodiment of the disclosure, the short-range communication tag may transmit, to a third device that has approached or is in contact with the short-range communication tag, the identification information corresponding to the application and the identification information corresponding to the second device.

In an embodiment of the disclosure, the short-range communication tag may perform a communication connection between the second device and the third device, based on the identification information corresponding to the second device, when a first function of the application according to the identification information corresponding to the application is identified in the third device.

A first device according to an embodiment of the disclosure may include a communication interface, memory storing at least one instruction, and at least one processor including processing circuitry. The at least one instruction, when executed by the at least one processor individually or collectively, may cause the first device to, when approach or contact with a short-range communication tag is identified, control the communication interface to obtain identification information corresponding to an application from the short-range communication tag. The at least one instruction, when executed by the at least one processor individually or collectively, may cause the first device to perform a communication connection to a second device according to the application executed based on the identification information corresponding to the application. The at least one instruction, when executed by the at least one processor individually or collectively, may cause the first device to obtain, from the second device, identification information corresponding to the second device, based on the communication connection to the second device. The at least one instruction, when executed by the at least one processor individually or collectively, may cause the first device to, when approach or contact with the short-range communication tag is identified, store, in the short-range communication tag, the identification information corresponding to the second device.

In an embodiment of the disclosure, the at least one instruction, when executed by the at least one processor individually or collectively, may cause the first device to transmit a signal including a request for an image corresponding to authentication including the identification information corresponding to the second device by executing the application.

In an embodiment of the disclosure, the at least one instruction, when executed by the at least one processor individually or collectively, may cause the first device to obtain, from the second device, the image corresponding to the authentication corresponding to the second device. In an embodiment of the disclosure, the at least one instruction, when executed by the at least one processor individually or collectively, may cause the first device to obtain the identification information corresponding to the second device, based on the image corresponding to the authentication.

In an embodiment of the disclosure, the at least one instruction, when executed by the at least one processor individually or collectively, may cause the first device to, when the identification information corresponding to the second device is obtained, output a guide corresponding to a request to approach or contact the first device with the short-range communication tag.

In an embodiment of the disclosure, the at least one instruction, when executed by the at least one processor individually or collectively, may cause the first device to, when the application according to the identification information corresponding to the application is not installed in the first device, install the application.

In an embodiment of the disclosure, the identification information corresponding to the second device may include at least one of an MAC address of the second device or a shared key of the second device.

In an embodiment of the disclosure, the at least one instruction, when executed by the at least one processor individually or collectively, may cause the first device to identify signals corresponding to advertisements transmitted from peripheral devices by executing the application. In an embodiment of the disclosure, the at least one instruction, when executed by the at least one processor individually or collectively, may cause the first device to obtain the identification information corresponding to the second device from a signal corresponding to an advertisement transmitted from the second device among the signals corresponding to the advertisements transmitted from the peripheral devices.

In an embodiment of the disclosure, the at least one instruction, when executed by the at least one processor individually or collectively, may cause the first device to obtain data related to the peripheral devices, based on the signals corresponding to the advertisements transmitted from the peripheral devices. In an embodiment of the disclosure, the at least one instruction, when executed by the at least one processor individually or collectively, may cause the first device to, when the second device is included in the data related to the peripheral devices, request the second device for the identification information corresponding to the second device. In an embodiment of the disclosure, the at least one instruction, when executed by the at least one processor individually or collectively, may cause the first device to obtain, from the second device, the identification information corresponding to the second device.

A computer-readable recording medium has recorded thereon at least one instruction according to an embodiment of the disclosure, wherein the at least one instruction, when executed by at least one processor of an electronic device, may cause the electronic device to perform the operating method described above.

An embodiment of the disclosure may also be realized in the form of a recording medium including instructions executable by a computer, such as a program module executed by a computer. A computer-readable medium may be an arbitrary available medium accessible by a computer, and includes all volatile and non-volatile media and separable and non-separable media. Furthermore, the computer-readable recording medium may include a computer storage medium. Examples of the computer storage medium include all volatile and non-volatile media and separable and non-separable media, which have been implemented by an arbitrary method or technology, for storing information such as computer-readable instructions, data structures, program modules, and other data.

The embodiments of the disclosure may be implemented as a software program that includes instructions stored on computer-readable storage media.

A computer is an apparatus capable of calling a stored instruction from a storage medium and operating according to an embodiment of the disclosure according to the called instruction, and may include an electronic device according to embodiments of the disclosure.

The computer-readable storage medium may be provided in the form of a non-transitory storage medium. The term "non-transitory" only means that a storage medium does not include a signal and is tangible, and does not distinguish whether data is stored in the storage medium semi-permanently or temporarily.

Furthermore, a control method according to embodiments of the disclosure may be provided by being included in a computer program product. The computer program products are products that can be traded between sellers and buyers.

The computer program product may include a software program or a computer-readable storage medium storing a software program. For example, the computer program product may include a product (for example, a downloadable application) in a form of a software program that is electronically distributable through a manufacturer of a device or an electronic market (for example, Google PlayStore^{™} or AppStore^{™}). For electronic distribution, at least a part of the software program may be stored in the storage medium or temporarily generated. In this case, the storage medium may be a storage medium of a server of a manufacturer, a server of an electronic market, or a relay server that temporarily stores the software program.

The computer program product may include a storage medium of a server or a storage medium of a device, in a system including the server and the device. Alternatively, when there is a third device (e.g., a smartphone) that communicates with a server or a device, the computer program product may include a storage medium of the third device. Alternatively, the computer program product may include the software program transmitted from the server to the device or the third device, or transmitted from the third device to the device.

In this case, one of the server, the device, and the third device may perform a method according to embodiments of the disclosure by executing the computer program product. In an embodiment, two or more of the server, the device, and the third device may perform the method according to embodiments of the disclosure in a distributed fashion by executing the computer program product.

For example, a server, for example, a cloud server or an artificial intelligence server, may execute the computer program product stored in the server to control the device communicatively connected to the server to perform the method according to embodiments of the disclosure.

In another example, the third device may execute the computer program product to control the device communicatively connected to the third device to perform the method according to an embodiment of the disclosure. When the third device executes the computer program product, the third device may download the computer program product from the server and execute the downloaded computer program product. Alternatively, the third device may execute a computer program product provided in a preloaded state to perform the method according to embodiments of the disclosure.

Furthermore, in the specification, the term "interface" may be a hardware component such as a processor or circuitry and/or a software component that is executed by a hardware component such as a processor.

The above description of the disclosure is provided for illustration, and it will be understood by one of ordinary skill in the art that various changes in form and details may be readily made therein without departing from essential features and the scope of the disclosure as defined by the following claims. Accordingly, embodiments of the disclosure described above are examples in all aspects and are not limited. For example, each element described as a single type may be implemented in a distributed manner, and similarly, elements described as distributed may be implemented in a combined form.

The scope of the disclosure is defined by the appended claims rather than the detailed description, and all changes or modifications within the scope of the appended claims and their equivalents will be construed as being included in the scope of the disclosure.

## Claims

1. An operating method of a first device, the operating method comprising:
when a first approach or contact with a short-range communication tag is identified, obtaining identification information corresponding to an application from the short-range communication tag;
performing a communication connection to a second device according to the application executed based on the identification information corresponding to the application;
obtaining, from the second device, identification information corresponding to the second device, based on the communication connection to the second device; and
when a second approach or contact with the short-range communication tag is identified, storing, in the short-range communication tag, the identification information corresponding to the second device.

2. The operating method of claim 1, wherein the performing of the communication connection to the second device according to the application executed based on the identification information corresponding to the application comprises transmitting, by executing the application, data including a request for an image corresponding to authentication including the identification information corresponding to the second device.

3. The operating method of claim 1 or 2, wherein the obtaining of, from the second device, the identification information corresponding to the second device, based on the communication connection to the second device comprises:
obtaining, from the second device, the image corresponding to the authentication including the identification information corresponding to the second device; and
obtaining the identification information corresponding to the second device, based on the image corresponding to the authentication.

4. The operating method of any one of claims 1 to 3, further comprising, when the identification information corresponding to the second device is obtained, outputting a guide corresponding to a request to approach or contact the first device with the short-range communication tag.

5. The operating method of any one of claims 1 to 4, wherein the performing of the communication connection to the second device according to the application executed based on the identification information corresponding to the application comprises:
identifying, by executing the application, signals corresponding to advertisements transmitted from peripheral devices; and
obtaining the identification information corresponding to the second device from a signal corresponding to an advertisement transmitted from the second device among the signals corresponding to the advertisements transmitted from the peripheral devices.

6. A first device (100) comprising:
memory (110) storing at least one instruction;
at least one processor (120) including processing circuitry; and
a communication interface (130),
wherein the at least one instruction, when executed by the at least one processor (120) individually or collectively, causes the first device (100) to:
when a first approach or contact with a short-range communication tag is identified, obtain identification information corresponding to an application from the short-range communication tag;
perform a communication connection to a second device according to the application executed based on the identification information corresponding to the application;
obtain, from the second device, identification information corresponding to the second device, based on the communication connection to the second device; and
when a second approach or contact with the short-range communication tag is identified, store, in the short-range communication tag, the identification information corresponding to the second device.

7. The first device (100) of claim 6, wherein the at least one instruction, when executed by the at least one processor (120) individually or collectively, causes the first device (100) to transmit, by executing the application, a signal including a request for an image corresponding to authentication including the identification information corresponding to the second device.

8. The first device (100) of claim 6 or 7, wherein the at least one instruction, when executed by the at least one processor (120) individually or collectively, causes the first device (100) to:
obtain, from the second device, the image corresponding to the authentication corresponding to the second device; and
obtain the identification information corresponding to the second device, based on the image corresponding to the authentication.

9. The first device (100) of any one of claims 6 to 8, wherein the at least one instruction, when executed by the at least one processor (120) individually or collectively, causes the first device (100) to, when the identification information corresponding to the second device is obtained, output a guide corresponding to a request to approach or contact the first device with the short-range communication tag.

10. The first device (100) of any one of claims 6 to 9, wherein the at least one instruction, when executed by the at least one processor (120) individually or collectively, causes the first device (100) to, when the application according to the identification information corresponding to the application is not installed in the first device, install the application.

11. The first device (100) of any one of claims 6 to 10, wherein the identification information corresponding to the second device corresponds to at least one of a media access control, MAC, address corresponding to the second device or a shared key of the second device.

12. The first device (100) of any one of claims 6 to 11, wherein the at least one instruction, when executed by the at least one processor (120) individually or collectively, causes the first device (100) to:
identify, by executing the application signals corresponding to advertisements transmitted from peripheral devices; and
obtain the identification information corresponding to the second device from a signal corresponding to an advertisement transmitted from the second device among the signals corresponding to the advertisements transmitted from the peripheral devices.

13. The first device (100) of any one of claims 6 to 12, wherein the at least one instruction, when executed by the at least one processor (120) individually or collectively, causes the first device (100) to:
obtain data related to the peripheral devices, based on the signals corresponding to the advertisements transmitted from the peripheral devices;
when the second device is included in the data related to the peripheral devices, request the second device for the identification information corresponding to the second device; and
obtain, from the second device, the identification information corresponding to the second device.

14. The first device (100) of any one of claims 6 to 13, wherein the short-range communication tag transmits, to a third device that has approached or is in contact with the short-range communication tag, the identification information corresponding to the application and the identification information corresponding to the second device.

15. A non-transitory computer-readable recording medium having recorded thereon at least one instruction, wherein the at least one instruction, when executed by a processor of an electronic device, causes the electronic device to perform, on a computer, the operating method of any one of claims 1 to 5.
